# EUROPÄISCHE PATENTSCHRIFT

(11) **EP 1 448 671 B1**
(45) Veröffentlichungstag und Bekanntmachung des Hinweises auf die Patenterteilung: **12.09.2007**
(21) Anmeldenummer: 02787386.8
(22) Anmeldetag: 19.11.2002
(51) Int. Cl.: C08G 73/06

(54) **ERZEUGNISSE, INSBESONDERE FORMMASSEN AUS TRIAZINSEGMENTE ENTHALTENDEN POLYMEREN, VERFAHREN ZU DEREN HERSTELLUNG UND VERWENDUNGEN**
PRODUCTS, ESPECIALLY MOULDING MATERIALS OF POLYMERS CONTAINING TRIAZINE SEGMENTS, METHOD FOR THE PRODUCTION THEREOF AND USES OF THE SAME
PRODUITS, EN PARTICULIER MATIERES A MOULER, A SAVOIR DES POLYMERES CONTENANT DES SEGMENTS TRIAZINE, LEUR PROCEDE DE PRODUCTION ET LEURS UTILISATIONS

(30) Priorität: 19.11.2001 AT 18122001; 19.11.2001 AT 18132001
(43) Veröffentlichungstag der Anmeldung: 25.08.2004
(73) Patentinhaber: AMI Agrolinz Melamine International GmbH, 4021 Linz (AT)
(72) Erfinder: RÄTZSCH, Manfred, A-4062 Wilhering / Thalheim (AT); BUCKA, Hartmut, A-4622 Eggendorf (AT); DICKE, René, A-4020 Linz (AT); BURGER, Martin, A-4020 Linz (AT); PFEIFFER, Steffen, A-4030 Linz (AT); FÜRST, Christian, A-4040 Linz (AT)
(74) Vertreter: Gross, Felix
(86) Internationale Anmeldenummer: PCT/DE2002/004305
(87) Internationale Veröffentlichungsnummer: WO 2003/046053

(56) Entgegenhaltungen:
- DE-A- 19 644 930
- US-A- 5 942 598

## Beschreibung

Die Erfindung betrifft Erzeugnisse, insbesondere Formmassen aus Triazinsegmente enthaltenden Polymeren sowie Verfahren zu deren Herstellung und Verwendungen der Erzeugnisse.

Unter einem Erzeugnis wird in dieser Anmeldung sowohl ein Endprodukt (z.B. ein Spritzgussteil) als auch eine Formmasse verstanden, die als Zwischenprodukt dient. Formmassen sind ungeformte Erzeugnisse, die unter Einwirkung mechanischer Kräfte innerhalb eines bestimmten Temperaturbereichs durch Formung bleibend zu Formteilen oder Halbzeugen geformt werden können. Wenn in dieser Anmeldung Erzeugnissen beschrieben werden, so werden z.B. Endprodukte und Formmassen angesprochen. Soll explizit auf Formmassen Bezug genommen werden, so werden diese direkt erwähnt.

Somit umfasst diese Erfindung insbesondere Verfahren zur Herstellung von Endprodukten als auch Verfahren zu Herstellung von Formmassen.

Erzeugnisse aus Triazinsegmente enthaltenden Polymeren wie Melamin-Formaldehyd-Harze oder Melamin-Hamstoff-Formaldehyd-Harze in Form von Beschichtungen, Schichtpressstoffen, Laminaten, Formstoffen im Haushaltsbereich und der Elektroindustrie, Fasern oder Schäumen [Ullmanns Encyclopedia of Industrial Chemistry (1987), Vol. A2, 130-131] sind bekannt. Von Nachteil bei der Herstellung von Halbzeugen oder Formstoffen aus Melaminharzen ist die schwierige Verarbeitbarkeit nach üblichen thermoplastischen Verarbeitungsverfahren wie Extrusion, Spritzguss oder Blasformen, da hochmolekulare Melaminharze vernetzt und unschmelzbar sind. Unvernetzte niedermolekulare Melaminharz-Vorkondensate besitzen eine zu geringe Schmelzviscosität für diese Verarbeitungsverfahren und können lediglich als hochgefüllte Formmassen bei langen Zykluszeiten unter Härtung der Erzeugnisse verarbeitet werden (Woebcken, W., Kunststoff-Handbuch Bd. 10 "Duroplaste", Carl Hanser Verl. München 1988, S. 266-274). Fasern (EP 0093 965 A1), Schäume (EP 0017671 A1) oder Beschichtungen (WO 96/20239 A1) aus Melaminharzen können auf Grund der niedrigen Schmelzviskosität der Melaminharzvorkondensate nur ausgehend von Lösungen der Melaminharzvorkondensate unter Aushärtung während der Formgebung hergestellt werden. Darüber hinaus führen die flüchtigen Nebenprodukte bei der Polykondensation der Aminoplastvorkondensate zu Mikroporen oder Rissen in der Oberfläche der Produkte.

Somit entstehen Materialien, die eine herabgesetzte Resistenz gegenüber Umwelteinflüssen besitzen.

Bekannt sind weiterhin hochmolekulare lineare Polytriazine mit aromatischen Brückengliedern (Bjuller, K., Teplo- i Termostoikie Polimery, Khimiya, Moskva 1984, S. 565-581). Diese linearen Polytriazine besitzen Glastemperaturen über 200°C und lassen sich nicht unzersetzt aufschmelzen.

Es besteht die Aufgabe, Erzeugnisse, insbesondere Formmassen der genannten Art zu schaffen, die sich nach üblichen thermoplastischen Verarbeitungsverfahren der Schmelzeverarbeitung wie Extrusion, Spritzguss oder Blasformen verarbeiten lassen.

Die erfindungsgemäße Aufgabe wird durch Erzeugnisse, insbesondere Formmassen aus Triazinsegmente enthaltenden Polymeren gelöst, wobei die Triazinsegmente enthaltenden Polymere erfindungsgemäß Mischungen aus schmelzbaren 4- bis 18-Kern-Oligotriazinethern auf Basis von Aminotriazinethern der Struktur 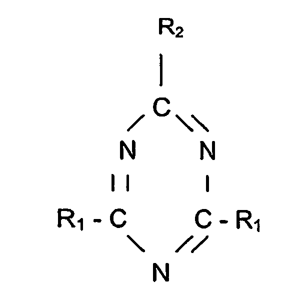 R₁ = R₄-O-CHR₃-NH-; [R₄-O-CHR₃]₂N-
R₂ = -NH₂, -NH-CHR₃-OR₄, -N[CHR₃-O-R₄]₂, -CH₃, -C₃H₇, -C₆H₅, -OH, Phthalimido-. Succinimido-,
R₃ = H oder C₁-C₇ - Alkyl;
R₄ = C₁-C₁₈- Alkyl; H, sind.

Bei einer bevorzugten Ausführungsform sind die Triazinsegmente in den Oligotriazinethern 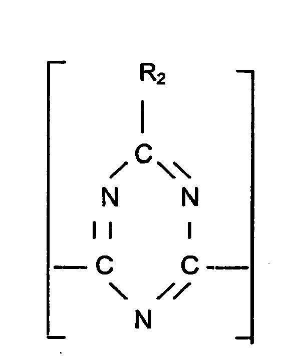 R₂ = -NH₂, -NH-CHR₃-OR₄, -N[CHR₃-O-R₄]_{2,}-CH₃, -C₃H₇, -C₆H₅,
R₃ = H oder C₁-C₇ - Alkyl;
R₄ = C₁-C₁₈ - Alkyl; H,
durch Brückenglieder zu 4- bis 18-Kern-Oligotriazinethem mit linearer und/oder verzweigter Struktur verknüpft sind.
In einer weiteren bevorzugten Ausführungsform bilden die Brückenglieder bei linearer Verknüpfung der Triazinringe den Typ I bis III

-NH - X - NH- (I),

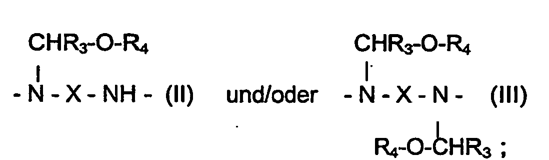

wobei X = CHR₃ und gegebenenfalls CHR₃-O-CHR₃ ist,

Mit Vorteil sind die Brückenglieder bei verzweigter Struktur (*z* > *v* + 2; *z* = Zahl der verknüpften Triazinringe; *v* = Zahl der Verzweigungspunkte) sowohl Brückenglieder von Typ I bis III in den linearen Kettensegmenten als auch Brückenglieder vom Typ IV bis VII in den durchgängig verzweigten Kettensegmenten (*z = v* + 2): 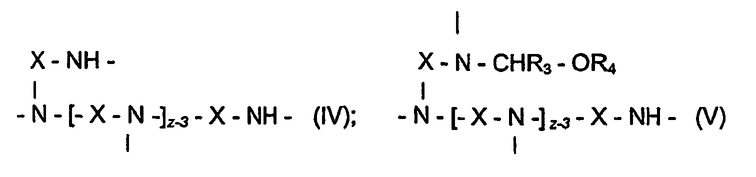 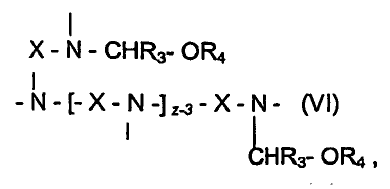 wobei X = CHR₃ und gegebenenfalls CHR₃- O - CHR₃ ist,
R₃ = H oder C₁-C₇ - Alkyl;
R₄ = C₁-C₁₈ - Alkyl; H,

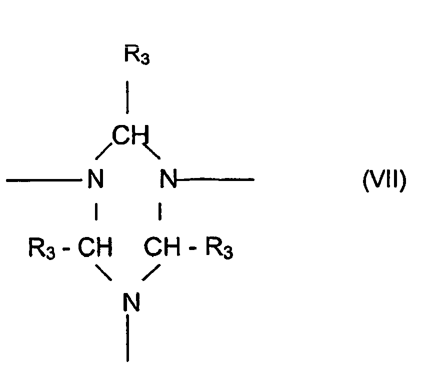

Bei einer weiteren vorteilhaften Ausführungsform ist der Substituent R₄ in den Aminotriazinethern bzw. Oligotriazinethern ausschließlich C₁-C₁₈ - Alkyl oder überwiegend C₁-C₁₈- Alkyl.

Auch ist es vorteilhaft, wenn in den Oligotriazinethern das Molverhältnis Ethergruppen/Triazinsegmente 1 : 2 bis 4,5 : 1 beträgt.

Ein weitere vorteilhafte Ausgestaltung besteht darin, dass Oligotriazinether, bei denen in den Brückenglieder X = CHR₃- O-CHR₃ ist, bis zu 35 Masse% in den Formmassen aus Triazinsegmente enthaltenden Polymeren enthalten,

Mit Vorteil enthalten die Erzeugnisse, insbesondere die Formmassen aus Triazinsegmente enthaltenden Polymeren gegebenenfalls bis zu 75 Masse% Füllstoffe und/oder Verstärkungsfasern, bis zu 50 Masse% weitere reaktive Polymere vom Typ Ethylen-Copolymere, Maleinsäureanhydrid-Copo-lymere, modifizierte Maleinsäureanhydrid-Copolymere, Poly(meth)acrylate, Polyamide, Polyester und/oder Polyurethane, sowie bis zu 2 Masse% Stabilisatoren, UV-Absorber und/oder Hilfsstoffe.

Bei einer vorteilhaften Ausgestaltung sind die Oligotriazinether in polaren Lösungsmitteln vom Typ C₁-C₁₀-Alkohole, Dimethylformamid oder Dimethylsulfoxid löslich. Vorteilhafterweise werden die Erzeugnisse durch thermoplastische Verarbeitung von Formmassen aus Mischungen von schmelzbaren 4- bis 18 Kern-Oligotriazinethern auf der Basis der Struktur gemäß Anspruch 1 hergestellt.

Auch ist es vorteilhaft, wenn die Formmassen in Form von zylindrischen, linsenförmigen, pastillenförmigen oder kugelförmigen Partikeln mit einem mittleren Durchmesser von 0,5 bis 8 mm vorliegen.

Bevorzugt sind die Erzeugnisse aus Triazinsegmente enthaltenden Polymeren Halbzeuge, insbesondere Platten, Rohre, Profile, Beschichtungen, Schaumstoffe oder Fasern, oder Formstoffe, insbesondere Spritzgussteile, nach dem Harzinfusions- bzw. Harzinjektionsverfahren hergestellte Bauteile oder aus Fasern nach der Wickel-, Flecht- oder Pultrusionstechnik und nachfolgender Harzimprägnierung hergestellte Bauteile.

Bevorzugt werden Erzeugnisse aus Triazinsegmente enthaltenden Polymeren, bei denen die eingesetzten Formmassen aus Mischungen von Oligotriazinethem bestehen, bei denen
R₂ =-NH₂, -NH-CHR₃-OR₄, oder -N[CHR₃-O-R₄]₂;
R₃= H;
R₄ =C₁-C₁₈ - Alkyl oder H; bedeuten.

Bevorzugt werden als Oligotriazinether in den Formmassen aus Triazinsegmente enthaltenden Polymeren 4- bis 8-Kern-Oligotriazinether, die 4 bis 8 Triazinzyklen im Makromolekül enthalten.

In den Formmassen aus Triazinsegmente enthaltenden Polymeren sind die Oligotriazinether in den Mischungen bevorzugt Oligotriazinether mit R₃ = H.

Bevorzugt enthalten die Mischungen aus Oligotriazinethem in den Formmassen aus Triazinsegmente enthaltenden Polymeren 70 bis 90 Masse% Oligotriazinether in linearer Verknüpfung.

Die Erzeugnisse aus Triazinsegmente enthaltenden Polymeren werden bevorzugt aus Formmassen hergestellt, die Mischungen aus Oligotriazinethem mit 70 bis 90 Masse% Oligotriazinethern enthalten, in denen die Triazinsegmente durch -NH-CHR₃-NH- - Gruppen verknüpft sind.

Die Brückenglieder bei linearer Verknüpfung der Triazinringe des Typs I bis III für X = CHR₃ besitzen die Struktur

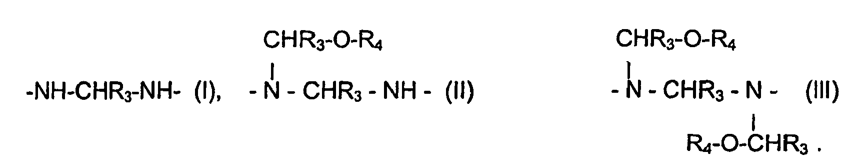

Bei X = CHR₃- O - CHR₃ besitzen die Brückenglieder des Typs I bis III die Struktur

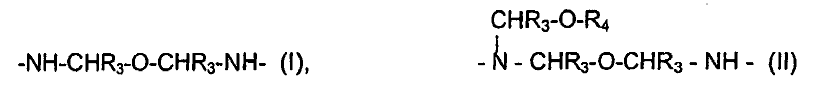

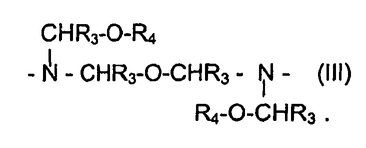

Die Mischungen aus Oligotriazinethern in den Formmassen aus Triazinsegmente enthaltenden Polymeren können Gemische aus Oligotriazinethern mit gleichem oder unterschiedlichem Substituent R₂ = -NH₂, -NH-CHR₃-OR₄, -N[CHR₃-O-R₄]₂, -CH₃, -C₃H₇, -C₆H₅, -OH, Phthalimido-. Succinimido- sein.

Beispiele für geeignete Füllstoffe, die in den Formmassen aus Triazinsegmente enthaltenden Polymeren bis zu 75 Masse% enthalten sein können, sind Al₂O₃, Al(OH)₃, Bariumsulfat, Calciumcarbonat, Glaskugeln, Kieselerde, Glimmer, Quarzmehl, Schiefermehl, Mikrohohlkugeln, Ruß, Talkum, Gesteinsmehl, Holzmehl, Cellulosepulver und/oder Schalen- und Kernmehle wie Erdnussschalenmehl oder Olivenkernmehl. Bevorzugt werden als Füllstoffe Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Ste-vensit, Laponit, Taneolit, Vermiculit, Halloysit, Volkonskoit, Magadit, Rectorit, Kenyait, Sauconit, Borfluorphlogopite und/oder synthetische Smectite.

Beispiele für geeignete Verstärkungsfasern, die in den Formmassen aus Triazinsegmente enthaltenden Polymeren bis zu 75 Masse% enthalten sein können, sind anorganische Fasern, insbesondere Glasfasern und/oder Kohlenstofffasern, Naturfasern, insbesondere Cellulosefasern wie Flachs, Jute, Kenaf und Holzfasern, und/oder Kunststofffasern, insbesondere Fasern aus Polyacrylnitril, Polyvinylalkohol, Polyvinylacetat, Polypropylen, Polyestern und/oder Polyamiden.

Beispiele für reaktive Polymere vom Typ Ethylen-Copolymere, die in den Erzeugnisse, insbesondere Formmassen aus Triazinsegmente enthaltenden Polymeren bis zu 50 Masse% enthalten sein können, sind teilverseifte Ethylen-Vinylacetat-Copolymere, Ethylen-Butylacrylat-Acrylsäure-Copo-lymere, Ethylen-Hydroxyethylacrylat-Copolymere oder Ethylen-Butylacrylat-Glycidylmeth-acrylat-Copolymere.

Beispiele für reaktive Polymere vom Typ Maleinsäureanhydrid-Copolymere, die in den Erzeugnisse, insbesondere Formmassen aus Triazinsegmente enthaltenden Polymeren bis zu 50 Masse% enthalten sein können, sind C₂-C₂₀-Olefin - Maleinsäureanhydrid-Copolymere oder Copolymere aus Maleinsäureanhydrid und C₈-C₂₀-Vinylaromaten.

Beispiele für die C₂-C₂₀-Olefin - Komponenten, die in den Maleinsäureanhydrid-Copolymeren enthaltenen sein können, sind Ethylen, Propylen, Buten-1, Isobuten, Diisobuten, Hexen-1, Octen-1, Hepten-1, Penten-1, 3-Methylbuten-1, 4-Methylpenten-1, Methylethylpenten-1, Ethylpenten-1, Ethylhexen-1, Octadecen-1 und 5,6-Dimethylnorbornen.

Beispiele für die C₈-C₂₀-Vinylaromaten - Komponenten, die in den Maleinsäureanhydrid-Copolymeren enthaltenen sein können, sind Styren, α-Methylstyren, Dimethylstyren, Isopropenylstyren, p-Methylstyren und Vinylbiphenyl.

Die in den Erezeugnisse, insbesondere den Formmassen aus Triazinsegmente enthaltenden Polymeren gegebenenfalls enthaltenen modifizierten Maleinsäureanhydrid-Copolymere sind bevorzugt partiell oder vollständig veresterte, amidierte bzw. imidierte Maleinsäureanhydrid-Copolymere.

Besonders geeignet sind modifizierten Copolymere aus Maleinsäureanhydrid und C₂-C₂₀-Olefinen bzw. C₈-C₂₀-Vinylaromaten mit einem Molverhältnis von 1 : 1 bis 1 : 9 und Molmassen-Gewichtsmitteln von 5000 bis 500000, die mit Ammoniak, C₁-C₁₈-Monoalkylaminen, C₆-C₁₈-aromatischen Monoaminen, C₂-C₁₈-Monoaminoalkoholen, monoaminierten Poly(C₂-C₄-alkylen)oxiden einer Molmasse von 400 bis 3000, und/oder monoveretherten Poly(C₂-C₄-alkylen)oxiden einer Molmasse von 100 bis 10000 umgesetzt worden sind, wobei das Molverhältnis Anhydridgruppen Copolymer / Ammoniak, Aminogruppen C₁-C₁₈-Monoalkylamine, C₆-C₁₈-aromatische Monoamine, C₂-C₁₈-Monoaminoalkohole bzw. monoaminiertes Poly-(C₂-C₄-alkylen)oxid und/oder Hydroxygruppen Poly(C₂-C₄-alkylen)oxid 1 : 1 bis 20 : 1 beträgt.

Beispiele für reaktive Polymere vom Typ Poly(meth)acrylate, die in den Erzeugnsisse, insbesondere den Formmassen aus Triazinsegmente enthaltenden Polymeren bis zu 50 Masse% enthalten sein können, sind Copolymere auf Basis von funktionellen ungesättigten (Meth)acrylatmonomeren wie Acrylsäure, Hydroxyethylacrylat, Glycidylacrylat, Methacrylsäure, Hydroxybutylmethacrylat, oder Glycidylmethacrylat und nichtfunktionellen ungesättigten (Meth)acrylatmonomeren wie Ethylacrylat, Butylacrylat. Ethylhexylacrylat, Methylmethacrylat, Ethylacrylat und/oder Butylmethacrylat und/oder C₈-C₂₀-Vinylaromaten. Bevorzugt werden Copolymere auf Basis Methacrylsäure, Hydroxyethylacrylat, Methylmethacrylat und Styren.

Beispiele für reaktive Polymere vom Typ Polyamide, die in den Erzeugnissen, insbesondere den Formmassen aus Triazinsegmente enthaltenden Polymeren bis zu 50 Masse% enthalten sein können, sind Polyamid-6, Polyamid-6,6, Polyamid-6,36, Polyamid-11, Polyamid-12, Polyaminoamide aus Polycar-bonsäuren und Polyalkylenaminen sowie die entsprechenden methoxylierten Polyamide.

Beispiele für reaktive Polymere vom Typ Polyester, die in den Erzeugnisse, insbesondere Formmassen aus Triazinsegmente enthaltenden Polymeren bis zu 50 Masse% enthalten sein können, sind Polyester mit Molmassen von 2000 bis 15000 aus gesättigten Dicarbonsäuren wie Phthalsäure, Isophthalsäure, Adipinsäure und/oder Bernsteinsäure, ungesättigten Dicarbonsäuren wie Maleinsäure, Fumarsäure und/oder Itakonsäure und Diolen wie Ethylenglycol, Butandiol, Neopentylglycol und/oder Hexandiol. Bevorzugt werden verzweigte Polyester auf Basis von Neopentylglycol, Trimethylolpropan, Isophthalsäure und Azelainsäure.

Beispiele für reaktive Polymere vom Typ Polyurethane, die in den Erzeugnisse, insbesondere Formmassen aus Triazinsegmente enthaltenden Polymeren bis zu 50 Masse% enthalten sein können, sind unvernetzte Polyurethane auf Basis von Toluylendiisocyanat, Diphenylmethandüsocyanat, Butandiisocyanat und/oder Hexandiisocynat als Diisocyanatkomponenten und Butandiol, Hexandiol und/oder Polyalkylenglycolen als Diolkomponenten mit Molmassen von 2000 bis 30000.

Beispiele für geeignete Stabilisatoren und UV-Absorber, die in den Erzeugnisse, insbesondere Formmassen aus Triazinsegmente enthaltenden Polymeren bis zu 2 Masse% enthalten sein können, sind Piperidinderivate, Benzophenonderivate, Benzotriazolderivate, Triazinderivate und/oder Benzofuranonderivate.

Beispiele für geeignete Hilfsstoffe, die in den Formmassen aus Triazinsegmente enthaltenden Polymeren bis zu 2 Masse% enthalten sein können, sind latente Härter wie Ammoniumsulfat und/oder Ammoniumchlorid und/oder Verarbeitungshilfsmittel wie Calciumstearat, Magnesiumstearat und/oder Wachse.

Beispiele für die in den Formmassen zur Herstellung von Erzeugnissen aus Triazinsegmente enthaltenden Polymeren enthaltenen Hilfsstoffe sind latente Härter wie Ammoniumsulfat oder Ammoniumchlorid und/oder Verarbeitungshilfsmittel wie Calciumstearat, Magnesiumstearat und/oder Wachse.

Bevorzugt sind die in den Formmassen enthaltenen Füllstoffe bzw. Adsorbermaterialien Al₂O₃, Al(OH)₃, SiO₂, Bariumsulfat, Calciumcarbonat, Glaskugeln, Kieselerde, Glimmer, Quarzmehl, Schiefermehl, Mikrohohlkugeln, Russ, Talkum, Schichtsilikate, Molekularsiebe, Gesteinsmehl, Holzmehl, Cellulose und/oder Cellulosederivate.

Besonders bevorzugt werden als Füllstoffe Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite.

Als Füllstoffe können in den Erzeugnissen aus Triazinsegmente enthaltenden Polymeren ebenfalls Schalen- und Kernmehle wie Erdnussschalenmehl oder Olivenkernmehl enthalten sein.

Als Adsorbermaterial werden in den Erzeugnissen aus Triazinsegmente enthaltenden Polymeren Schichtsilikate vom Typ Montmorillonit, Bentonit, Hectorit, silikatartige Molekularsiebe mit variierenden Aluminiumanteil, insbesondere der Typen A, X, Y, besonders bevorzugt 5A, Adsorber auf Siliciumdioxidbasis, Mikrohohlkugeln, Cellulose und/oder Cellulosederivate besonders bevorzugt.

Diese quellbaren Adsorbermaterialien dienen bei der Herstellung der Erzeugnisse aus Triazinsegmente enthaltenden Polymeren zur Adsorption für freiwerdende flüchtige Kondensationsprodukte.

Als Adsorber auf Siliciumdioxidbasis haben sich insbesondere Produkte des Herstellers Chemiewerk Bad Köstritz, Deutschland (Köstrosorb Typen) als geeignet erwiesen.

Geeignet sind weiterhin Adsorber auf Polyacrylsäurebasis.

Die in den Erzeugnissen aus Triazinsegmente enthaltenden Polymeren enthaltenen Verstärkungsfasern sind bevorzugt anorganische Fasern, insbesondere Glasfasern und/oder Kohlenstofffasern, Naturfasern, insbesondere Cellulosefasern sowie Flachs, Jute, Kenaf und Holzfasern, und/oder Kunststofffasern, insbesondere Fasern aus Polyacrylnitril, Polyvinylalkohol, Polyvinylacetat, Polypropylen, Polyestern und/oder Polyamiden.

Die Erzeugnisse, insbesondere Formmassen aus Triazinsegmente enthaltenden Polymeren werden erfindungsgemäß nach einem Verfahren hergestellt, bei dem Mischungen, die aus schmelzbaren, in stark polaren Lösungsmitteln vom Typ C₁-C₁₀-Alkohole, Dimethylformamid oder Dimethylsulfoxid löslichen, 4- bis 18-Kern-Oligotriazinethern auf Basis von Aminotriazinethem der Struktur 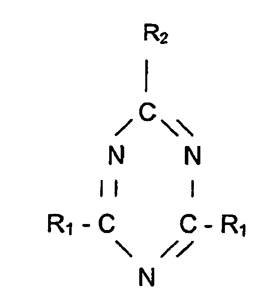 R₁ = R₄-O-CHR₃-NH- ; [R₄-O-CHR₃]₂N-
R₂ = -NH₂, -NH-CHR₃-OR₄, -N[CHR₃-O-R₄]₂. -CH₃, -C₃H₇, -C₆H₅,
R₃ = H oder C₁-C₇- Alkyl;
R₄ = C₁-C₁₈- Alkyl; H, bestehen, wobei die Triazinsegmente in den Oligotriazinethern 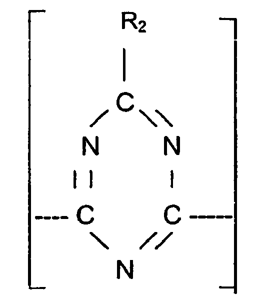 R₂ = -NH₂, -NH-CHR₃-OR₄, -N[CHR₃-O-R₄]₂, -CH₃, -C₃H₇, -C₆H₅,
R₃ = H oder C₁-C₇ - Alkyl;
R₄ = C₁-C₁₈ - Alkyl; H,
durch Brückenglieder zu 4- bis 18-Kern-Oligotriazinethern mit linearer und/oder verzweigter Struktur verknüpft sind,
die Brückenglieder bei linearer Verknüpfung der Triazinringe den Typ I bis III bilden 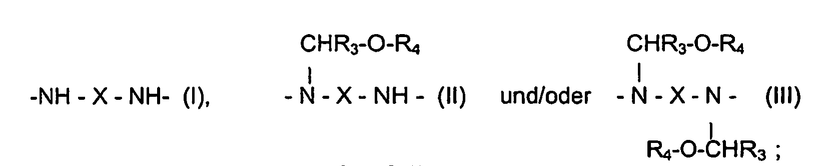 wobei X = CHR₃ und gegebenenfalls CHR₃- O - CHR₃ ist,
und die Brückenglieder bei verzweigter Struktur (*z* > *v* + 2; *z* = Zahl der verknüpften Triazinringe; *v* = Zahl der Verzweigungspunkte) sowohl Brückenglieder von Typ I bis III in den linearen Kettensegmenten als auch Brückenglieder vom Typ IV bis VII in den durchgängig verzweigten Kettensegmenten (*z = v* + 2) sind 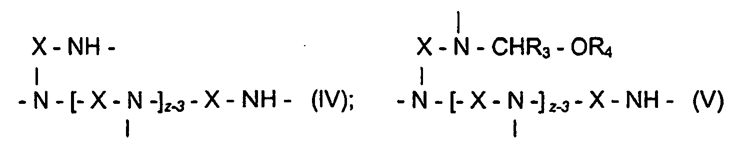 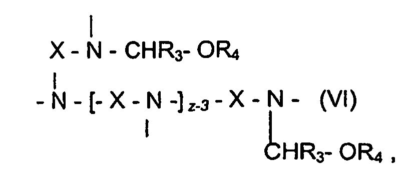 wobei X = CHR₃ und gegebenenfalls CHR₃- O - CHR₃ ist, 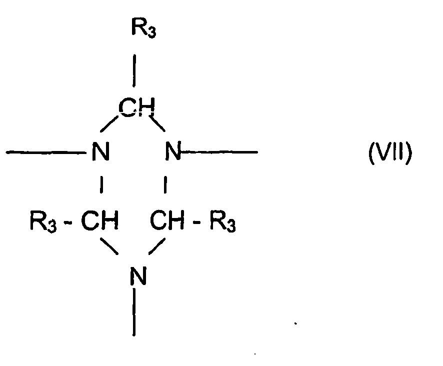 R₃ = H oder C₁-C₇ - Alkyl;
R₄ = C₁-C₁₈ - Alkyl; H,
wobei der Substituent R₄ in den Aminotriazinethem bzw. Oligotriazinethern ausschließlich C₁-C₁₈ - Alkyl oder überwiegend C₁-C₁₈ - Alkyl ist,
wobei in den Oligotriazinethern das Molverhältnis Ethergruppen/Triazinsegmente 1 : 2 bis 4,5 : 1 beträgt,
wobei Oligotriazinether, bei denen in den Brückenglieder X = CHR₃-O-CHR₃ ist, bis zu 35 Masse% in den Formmassen aus Triazinsegmente enthaltenden Polymeren enthalten sein können,
und wobei die Erzeugnisse, insbesondere die Formmassen aus Triazinsegmente enthaltenden Polymeren gegebenenfalls bis zu 75 Masse% Füllstoffe und/oder Verstärkungsfasern, bis zu 50 Masse% weitere reaktive Polymere vom Typ Ethylen-Copolymere, Maleinsäureanhydrid-Copoly-mere, modifizierte Maleinsäureanhydrid-Copolymere, Poly(meth)acrylate, Polyamide, Polyester und/oder Polyurethane, sowie bis zu 2 Masse% Stabilisatoren, UV-Absorber und/oder Hilfsstoffe, enthalten können,
nach einem Mehrstufenverfahren hergestellt werden, bei dem
- in der ersten Verfahrensstufe Vorkondensate aus C₁-C₈-Aldehyden und Triazinderivaten der Struktur 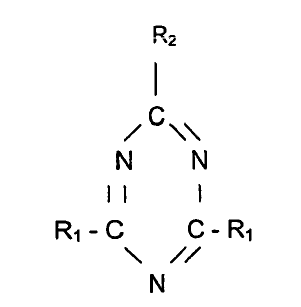 R₁ = -NH₂
   R₂ = -NH₂, -CH₃, -C₃H₇, -C₆H₅, -OH, Phthalimido-. Succinimido-,
   mit einem Molverhältnis Triazinderivat/Aldehyd 1:1 bis 1: 4 durch Umsetzung mit C₁-C₄-Alkoholen in Gegenwart ionischer Katalysatoren bei 5 bis 100°C verethert und die erhaltenen C₁-C₄-alkyl-oxa-C₁-C₈-alkylen-amino- substituierten Triazinderivate gegebenenfalls durch Umetherung mit C₄-C₁₈-Alkoholen unter Abdestillation von C₁-C₄-Alkoholen bei 80 bis 120°C in C₄-C₁₈-alkyl-oxa-C₁-C₈-alkylen-amino-substituierte Triazinderivate überführt werden, wobei durch das eingesetzte Verhältnis Hydroxy-C₁-C₈-alkylen-amino - Gruppen / Alkohol eine vollständige oder überwiegende Veretherung der Hydroxygruppen der Hydroxy-C₁-C₈-alkylen-amino-triazine erzielt wird,
- in der zweiten Verfahrensstufe zur Aufarbeitung des veretherten Vorkondensats nichtumgesetzter Alkohol und Wasser aus dem neutralisierten Reaktionsansatz abgetrennt wird, und gegebenenfalls die Schmelze der Aminotriazinether bei 70 bis 120°C in 70 bis 150 Masse%, bezogen auf die Aminotriazinether, C₃- bis C₆-Alkoholen aufgelöst wird und nach Abkühlung auf 15 bis 40°C unlösliche Anteile abgetrennt und die zugesetzten C₃- bis C₆-Alkohole bei 70 bis 140°C bis zu einem Restgehalt von 5 bis 20 Masse% verdampft werden, wobei in der zweiten Verfahrensstufe ein pH-Wert von 7 bis 10 eingehalten wird,
- in der dritten Verfahrensstufe zur Kondensation der Aminotriazinether zu Oligotriazinethem die erhaltene Schmelze, die C₁-C₁₈-alkyl-oxa-C₁-C₈-alkylen-amino - substituierte Triazine sowie geringe Anteile an Oligotriazinethem und an nichtumgesetztem bzw. nicht abgetrenntem Alkohol enthält, gegebenenfalls nach einer Temperierung von 20 bis 120 min bei 70 bis 140°C, in einen kontinuierlichen Kneter dosiert, bei einer Verweilzeit von 2 bis 12 min bei 140 bis 220°C unter Entgasung umgesetzt, und die Oligotriazinether, gegebenenfalls unter Dosierung von bis zu 75 Masse% Füllstoffen und/oder Verstärkungsfasern, weiteren reaktiven Polymeren vom Typ Ethylen-Copolymere, Maleinsäureanhydrid-Copolymere, modifizierte Maleinsaureanhydrid-Copolymere, Poly(meth)acrylate, Polyamide, Polyester und/oder Polyurethane, sowie bis zu 2 Masse%, jeweils bezogen auf die Oligotriazinether, Stabilisatoren, UV-Absorbern und/oder Hilfsstoffen in die Schmelze, gegebenenfalls nach Schmelzefiltration, ausgetragen und granuliert werden,
und wobei die in der ersten Verfahrensstufe eingesetzten Vorkondensate aus Triazinderivaten und C₁-C₈-Aldehyden gegebenenfalls in einer der ersten Verfahrensstufe vorgelagerten Reaktionsstufe durch Hydroxyalkylierung von Triazinderivaten mit C₁-C₈-Aldehyden in C₁-C₄-Alkoholen oder Mischungen aus 70 bis 99 Masse% C₁-C₄-Alkoholen und 30 bis 1 Masse% Wasser, gegebenenfalls in Gegenwart ionischer Katalysatoren, bei 45 bis 90°C und Verweilzeiten von 15 bis 140 min hergestellt werden, und die Lösungen der Vorkondensate aus Triazinderivaten und C₁-C₈-Aldehyden, gegebenenfalls nach Neutralisation, direkt bei der Veretherung in der ersten Verfahrensstufe eingesetzt werden.

Die in der ersten Verfahrensstufe eingesetzten Vorkondensate aus Triazinderivaten und C₁-C₈-Aldehyden sind Vorkondensate, die als C₁-C₈-Aldehyd-Komponenten insbesondere Formaldehyd, Acetaldehyd und/oder Trimethylolacetaldehyd und als Triazinderivat insbesondere Melamin, Acetoguanamin und/oder Benzoguanamin enthalten. Besonders bevorzugt werden Vorkondensate aus Melamin und Formaldehyd mit einem Molverhältnis Melamin/Formaldehyd 1:1 bis 1: 2.

Als Reaktoren sind zur Durchführung der ersten und zweiten Verfahrensstufe Rührreaktoren mit Bodenablass und absteigendem Kühler geeignet.

Die Katalyse der Veretherung in der ersten Verfahrensstufe sowie der Hydroxyalkylierung in der der ersten Verfahrensstufe vorgelagerten Reaktionsstufe kann als homogene Katalyse in Gegenwart von löslichen ionischen Katalysatoren oder als heterogene Katalyse in Gegenwart von Ionenaustauschern oder Zeolithen durchgeführt werden.

Bevorzugt erfolgt die Veretherung von Vorkondensaten aus C₁-C₈-Aldehyden und Triazinderivaten in der ersten Verfahrensstufe in Gegenwart saurer Katalysatoren bei einem pH-Wert von 3 bis 4.

Für die Umetherung mit C₄-C₁₈-Alkoholen ist es von Vorteil, den pH-Wert des Alkohols auf pH= 2 bis 7 einzustellen.

Beispiele für C₄-C₁₈-Alkohole für die Umetherung der in der ersten Verfahrensstufe hergestellten C₁-C₄-alkyl-oxa-C₁-C₈-alkylen-amino- substituierten Triazinderivate sind Butanol, Ethylhexanol, Octylalkohol, Laurylalkohol und Stearylalkohol. Die Umetherung mit C₄-C₁₈-Alkoholen erfolgt bei 60 bis 90°C unter Abdestillation des vom C₁-C₄-alkyl-oxa-C₁-C₈-alkylen-amino- substituierten Triazinderivat abgespaltenen C₁-C₄-Alkohols.

Bevorzugt werden bei dem erfindungsgemäßen Verfahren als ionische Katalysatoren und/oder zur Neutralisation des Reaktionsansatzes organische bzw. anorganische Säuren, Basen, Ionenaustauschharze und/oder saure Zeolithe eingesetzt.

Beispiele für eingesetzte Säuren sind Salzsäure, Salpetersäure, Schwefelsäure, Ameisensäure oder Essigsäure.

Beispiele für geeignete Ionenaustauschharze als heterogene Katalysatoren sind chlormethylierte und Trimethylamin-aminierte Copolymere aus Styren und Divinylbenzen, sulfonierte Copolymere aus Styren und Divinylbenzen und m-Phenylendiamin-Formaldehyd-Copolymere.

Der Vorteil des Einsatzes von Ionenaustauscherharzen besteht darin, dass bei der heterogenen Katalyse alle Prozessstufen, die die Neutralisation und Abtrennung von Salzen beinhalten, entfallen können.

Erfolgt die Veretherung in der ersten Verfahrensstufe unter homogener Katalyse mit Salzsäure als saurem Katalysator, so werden für die Neutralisation der Reaktionsmischung in der zweiten Verfahrensstufe bevorzugt alkoholische Lösungen von Alkalimetallhydroxiden eingesetzt. Für die Abtrennung der ausgefallenen Salze sind Drucknutschen geeignet. Die Verdampfung des Restgehalts an C₃-C₆-Alkoholen kann in kontinuierlichen Filmverdampfern mit Austragsschnecke erfolgen.

Werden in der zweiten Verfahrensstufe bei der Aufarbeitung des veretherten Vorkondensats nichtumgesetzter Alkohol und Wasser aus dem neutralisiertem Reaktionsansatz durch Abdestillation abgetrennt, so erfolgt die Abdestillation bevorzugt bei 50 bis 90°C/0,01 bis 0,2 bar.

Durch eine Temperierung der Aminotriazinether bei 70 bis 140°C in der dritten Verfahrensstufe bei dem erfindungsgemäßen Verfahren zur Herstellung von Erzeugnissen, insbesondere Formmassen aus Triazinsegmente enthaltenden Polymeren wird eine Kondensation bereits vor Dosierung in den kontinuierlichen Kneter initiiert. Als kontinuierliche Kneter sind bevorzugt Doppelschneckenextruder L/D = 32-48 mit gegenläufiger Schneckenanordnung und mehreren Entgasunszonen geeignet. Zur Abtrennung von Inhomogenitäten kann die Schmelze mit einer Zahnradpumpe in einen Schmelzefilter gefördert werden. Die Überführung der Schmelze in Granulatpartikel kann in Pastillierungsanlagen durch Dosierung der Schmelze über eine Aufgabevorrichtung auf ein kontinuierliches Stahlband und Kühlung und Verfestigung der abgelegten Pastillen erfolgen.

Der Anteil der Oligotriazinether, bei denen in den Brückenglieder X = CHR₃- O - CHR₃ ist, wird durch die Verweilzeit im Extruder und die Massetemperatur im Extruder in der dritten Verfahrensstufe bestimmt. Bei kurzen Verweilzeiten und niedrigen Massetemperaturen im Extruder können Oligotriazinether, bei denen in den Brückenglieder X = CHR₃ - O - CHR₃ ist, bis zu 35 Masse% in den Formmassen aus Triazinsegmente enthaltenden Polymeren enthalten sein. Bei langen Verweilzeiten und hohen Massetemperaturen im Extruder werden ausschließlich Oligotriazinether, bei denen in den Brückenglieder X = CHR₃ ist, gebildet.

Es ist von Vorteil, bei dem erfindungsgemäßen Verfahren zur Herstellung von Formmassen aus Triazinsegmente enthaltenden Polymeren Lösungen von Aminoplastvorkondensaten einzusetzen, die unmittelbar in einer vorgelagerten Prozessstufe hergestellt werden.

Wird bei der Herstellung von Erzeugnissen, insbesondere Formmassen aus Triazinsegmente enthaltenden Polymeren in einer der ersten Verfahrensstufe vorgelagerten Reaktionsstufe vom Triazinderivat ausgegangen, so wird bevorzugt bei der Hydroxyalkylierung des Triazinderivats eine methanolische Formaldehydlösung mit einem Feststoffgehalt von 40 bis 50 Masse% eingesetzt, die durch Auflösung von Paraformaldehyd in Methanol-Wasser-Mischungen hergestellt wird. Günstige Prozessbedingungen für die Hydroxyalkylierung in der vorgelagerten Reaktionsstufe in Batchreaktoren sind Verweilzeiten von 30 min bei 50°C bzw. 20 min bei 70°C.

Beispiele für die in der vorgelagerten Reaktionsstufe eingesetzten Triazinderivate sind Melamin, Acetoguanamin oder Benzoguanamin.

Bevorzugt erfolgt die Hydroxyalkylierung von Triazinderivaten mit C₁-C₈-Aldehyden in der der ersten Verfahrensstufe vorgelagerten Reaktionsstufe in Gegenwart alkalischer Katalysatoren bei pH = 8 bis 9.

Die Neutralisation des Reaktionsansatzes in der der ersten Verfahrensstufe vorgelagerten Reaktionsstufe wird bevorzugt unter Einsatz von Ionenaustauschern durchgeführt, wobei die alkalische Lösung des Vorkondensats kontinuierlich in ein mit Ionenaustauscher gefülltes Strömungsrohr gefördert wird.

Eine Vorzugsvariante zur Erzielung eines hohen Veretherungsgrades in der ersten Verfahrensstufe besteht darin, dass die Veretherung in Gegenwart von 10 bis 300 Masse%, bezogen auf die Trockensubstanz der eingesetzten Vorkondensate, Molekularsieben durchgeführt wird.

Beispiele für geeignete Molekularsiebe sind natürliche oder synthetische Zeolithe. Zusätze von mehr als 100 Masse%, bezogen auf die Trockensubstanz der eingesetzten Vorkondensate, an Molekularsieben bei der Veretherung sind von Vorteil, wenn wässrige Lösungen von Melaminharzvorkondensaten eingesetzt werden.

Wenn die Herstellung der Vorkondensate aus Triazinderivaten und C₁-C₈-Aldehyden in der der ersten Verfahrensstufe vorgelagerten Reaktionsstufe erfolgt, ist es von Vorteil, zur Erzielung eines hohen Veretherungsgrades in der ersten Verfahrensstufe die Veretherung der Vorkondensate mit C₁-C₄-Alkoholen in zwei Reaktionsschritten durchzuführen.

Eine besonders günstige Variante bei dem erfindungsgemäßen Verfahren zur Herstellung von Erzeugnissen, insbesondere Formmassen aus Triazinsegmente enthaltenden Polymeren ist die gleichzeitige Durchführung der der ersten Verfahrensstufe vorgelagerten Reaktionsstufe und der ersten Verfahrensstufe in einem Verfahrensschritt, wobei als Katalysatoren Mischungen aus alkalischen und sauren Ionenaustauschharzen mit einem Verhältnis der Ionenaustauschkapazitäten von 1 : 1,15 bis 1 : 1,7 eingesetzt werden.

Der besondere Vorteil der erfindungsgemäßen Erzeugnisse, insbesondere Formmassen aus Triazinsegmente enthaltenden Polymeren besteht darin, dass sie auf Grund der höheren Schmelzviscosität gegenüber üblichen Triazinderivatvorkondensaten wie Melamin-Formaldehyd-Vorkondensaten oder Guanamin-Formaldehyd-Vorkondensaten nach Schmelzeverarbeitungsverfahren wie Thermoplaste verarbeitet werden können. Bevorzugte Einsatzgebiete sind Schmelzkleber sowie die Herstellung von Platten, Rohren, Profilen, Spritzgussteilen, Fasern, Beschichtungen, Hohlkörpern und Schaumstoffen.

Die erfindungsgemäßen Erzeugnisse, insbesondere Formmassen aus Oligotriazinethern sind in polaren Lösungs-mitteln vom Typ C₁-C₁₀-Alkoholen, Dimethylformamid oder Dimethylsulfoxid in Konzen-trationen bis 60 Masse% löslich. Die Lösungen oder Dispersionen sind als Adhesiv, Imprägniermittel, Lackharz- oder Laminierharzrezeptur oder zur Herstellung von Schäumen, Mikrokapseln oder Fasern geeignet. Die Vorteile der Lösungen bzw. Dispersionen der Oligotriazinether gegenüber den entsprechenden Triazinharz-Vorkondensaten bestehen in der höheren Viscosität und den daraus resultierenden besseren Verlaufeigenschaften oder höheren Festigkeiten nicht ausgehärteter Zwischenprodukte bei der Faser- oder Schaumherstellung.

Die Erzeugnisse aus Triazinsegmente enthaltenden Polymeren werden nach einem Verfahren hergestellt, bei dem erfindungsgemäß Formmassen, die aus Mischungen von schmelzbaren 4- bis 18-Kern-Oligotriazinethern auf Basis von Triazinethern der Struktur 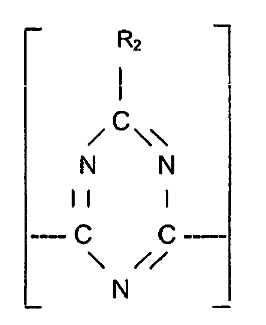 R₂ = -NH₂, -NH-CHR₃-OR₄, -N[CHR₃-O-R₄]_{2,}-CH₃, -C₃H₇, -C₆H_{5,}
R₃ = H oder C₁-C₇- Alkyl;
R₄ = C₁-C₁₈- Alkyl; H,
die durch Brückenglieder zu 4- bis 18-Kern-Oligotriazinethern mit linearer und/oder verzweigter Struktur verknüpft sind, bestehen,
die Brückenglieder bei linearer Verknüpfung der Triazinringe den Typ I bis III bilden 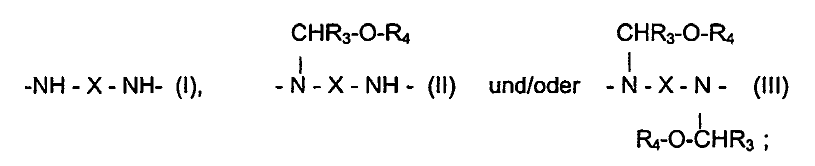 wobei X = CHR₃ und gegebenenfalls CHR₃- O - CHR₃ ist,
und die Brückenglieder bei verzweigter Struktur (*z* > *v* + 2; *z* = Zahl der verknüpften Triazinringe; *v* = Zahl der Verzweigungspunkte) sowohl Brückenglieder von Typ I bis III in den linearen Kettensegmenten als auch Brückenglieder vom Typ IV bis VII in den durchgängig verzweigten Kettensegmenten (*z = v* + 2) sind 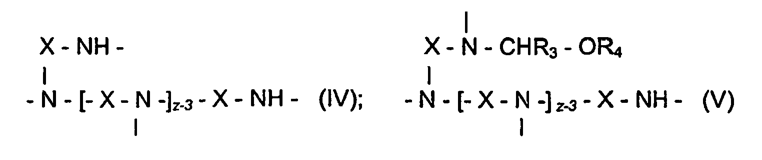 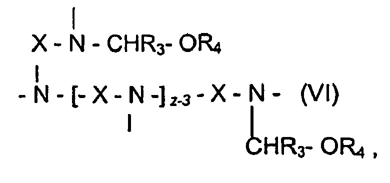 wobei X = CHR₃ und gegebenenfalls CHR₃- O - CHR₃ ist, 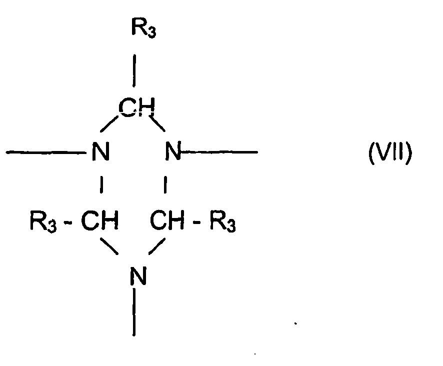 R₃ = H oder C₁-C₇ - Alkyl;
R₄ = C₁-C₁₈-Alkyl; H,
wobei der Substituent R₄ in den Aminotriazinethern bzw. Oligotriazinethern ausschliesslich C₁-C₁₈ - Alkyl oder überwiegend C₁-C₁₈ - Alkyl ist,
wobei in den Oligotriazinethern das Molverhältnis Ethergruppen/Triazinsegmente 1 : 2 bis 4,5 : 1 beträgt,
wobei Oligotriazinether, bei denen in den Brückenglieder X = CHR₃-O-CHR₃ ist, bis zu 35 Masse% in den Formmassen aus Triazinsegmente enthaltenden Polymeren enthalten sein können,
und wobei die Erzeugnisse aus Triazinsegmente enthaltenden Polymeren bis zu 75 Masse% Füllstoffe bzw. Adsorbermaterialien und/oder Verstärkungsfasern, bis zu 50 Masse% weitere reaktive Polymere vom Typ Ethylen-Copolymere, Maleinsäureanhydrid-Copolymere, modifizierte Maleinsäureanhydrid-Copolymere, Poly-(meth)acrylate, Polyamide, Polyester und/oder Polyurethane, sowie bis zu 2 Masse% Stabilisatoren, UV-Absorber und/oder Hilfsstoffe, enthalten können,
in kontinuierlichen Knetern bei Massetemperaturen von 105 bis 220°C und Verweilzeiten von 2 bis 12 min, gegebenenfalls unter Zusatz von bis zu 300 Masse% Füllstoffen und/oder Verstärkungsfasern, bis zu 100 Masse% weiteren reaktiven Polymeren vom Typ Ethylen-Copolymere, Maleinsäureanhydrid-Copolymere, modifizierte Maleinsäureanhydrid-Copolymere, Poly(meth)acrylate, Polyamide, Polyester, und/oder Polyurethane, sowie bis zu 2 Masse%, jeweils bezogen auf die eingesetzten Oligotriazinether, Stabilisatoren, UV-Absorber und/oder Hilfsstoffe, aufgeschmolzen werden und unter Aushärtung der Oligotriazinether nach üblichen Verarbeitungsverfahren für thermoplastische Polymere
A) als Schmelze auf einen Glättwerk aufgegeben und als Platte über Transportbänder abgezogen und geschnitten oder auf Flächenbahnen aus Metallfolien, Kunststofffolien, Papierbahnen oder Textilbahnen aufgesiegelt und als Mehrkomponentenverbunde abgezogen und konfektioniert werden, oder
B) über eine Profildüse ausgetragen und als Profil oder Plattenmaterial abgezogen, geschnitten und konfektioniert werden, oder
C) über eine Ringdüse ausgetragen, unter Einpressen von Luft als Rohr abgezogen, geschnitten und konfektioniert werden, oder
D) nach Eindosierung von Treibmitteln über eine Breitschlitzdüse ausgetragen und als geschäumtes Plattenmaterial abgezogen werden, oder
E) über die Breitschlitzdüse einer Rohrbeschichtungsanlage ausgetragen und schmelzflüssig auf das rotierende Rohr aufgesiegelt werden, oder
F) in Spritzgussmaschinen, bevorzugt mit Dreizonenschnecken einer Schneckenlänge von 18 bis 24 D, hohen Einspritzgeschwindigkeiten und bei Werkzeugtemperaturen von 5 bis 70°C, zu Spritzgussformteilen verarbeitet werden, oder
G) in Schmelzespinnanlagen mittels Schmelzepumpe durch das Kapillarwerkzeug in den Blasschacht extrudiert und als Fäden abgezogen oder nach dem Melt-Blow-Verfahren als Fasern abgetrennt, oder als Schmelze nach dem Rotationsspinnverfahren in eine Scherfeldkammer mit organischen Dispergiermitteln unter Bildung von Faserfibriden ausgetragen, und in Nachfolgeeinrichtungen weiterverarbeitet werden, oder
H) nach dem Harzinfusionsverfahren in eine offene Form mit dem Faserhalbzeug dosiert und nach der Vakuumsacktechnologie zu Laminaten ausgeformt werden, oder
I) nach dem Harzinjektionsverfahren in eine verriegelbare Form, in dem sich Preforms aus textilem Material befinden, injiziert werden und zu Bauteilen ausgeformt und ausgehärtet werden, oder
K) zur Schmelzeimprägnierung von nach dem Wickelverfahren, Flechtverfahren oder Pultrusionsverfahren hergestellter Bauteilrohlinge eingesetzt werden,
und die Erzeugnisse gegebenenfalls zur vollständigen Aushärtung einer thermischen Nachbehandlung bei Temperaturen von 180 bis 220°C und Verweilzeiten von 30 bis 120 min unterzogen werden.

Die für die Herstellung der Erzeugnisse aus Triazinsegmente enthaltenden Polymeren eingesetzten Formmassen können in Form von zylindrischen, linsenförmigen, pastillenförmigen oder kugelförmigen Partikeln mit einem mittleren Durchmesser von 0,5 bis 8 mm vorliegen.

Für die Herstellung von Erzeugnissen, die Füllstoffe, Verstärkungsfasern, weitere reaktive Polymere, Stabilisatoren, UV-Absorber und/oder Hilfsstoffe enthalten, können Formmassen eingesetzt werden, in denen diese Komponenten bereits enthalten sind, oder die Komponenten werden bei der Verarbeitung der Formmassen zugesetzt.

Für das Aufschmelzen der Formmassen aus Triazinsegmente enthaltenden Polymeren nach dem erfindungsgemäßen Verfahren sind als kontinuierliche Kneter Extruder mit Kurzkompressionsschnecken oder Dreizonenschnecken mit L/D = 20-40 geeignet. Bevorzugt werden 5-Zonen-Schnecken mit Einzugszone, Kompressionszone, Scherzone, Dekompressionszone und Homogenisierungszone. Schnecken mit Schnitttiefen von 1 : 2,5 bis 1 : 3,5 sind bevorzugt geeignet. Besonders günstig ist die Zwischenschaltung von statischen Mischern oder Schmelzepumpen zwischen Zylinder und Düse.

Günstige Massetemperaturen für die aufgeschmolzenen Formmassen aus Triazinsegmente enthaltenden Polymeren bei der Verarbeitung nach der Glättwerktechnologie zu Platten oder Beschichtungen oder bei der Herstellung von Platten, Profilen oder Rohren durch Austrag aus einer Profildüse liegen im Bereich von 110 bis 150°C.

Bei der Herstellung von geschäumtem Plattenmaterial durch Austrag über eine Breitschlitzdüse können Formmassen aus Triazinsegmente enthaltenden Polymeren eingesetzt werden, die gasabspaltende Treibmittel wie Natriumhydrogencarbonat, Azodicarbonamid, Zitronensäure/Bicarbonat-Treibsysteme und/oder Cyanursäuretrihydrazid enthalten, oder in die Schmelze werden vor dem Austrag leichtflüchtige Kohlenwasserstoffe wie Pentan, Isopentan, Propan und/oder Isobutan, oder Gase wie Stickstoff, Argon und/oder Kohlendioxid dosiert. Günstige Düsentemperaturen für den Austrag der Treibmittel- enthaltenden Schmelze sind 110 bis 135°C. Bevorzugte Schaumdichten der Schäume aus den Triazinsegmente enthaltenden Polymeren liegen im Bereich von 10 bis 500 kg/m².

Für die Extrusionsbeschichtung von Metallrohren sind Massetemperaturen der Schmelzen aus den Triazinsegmente enthaltenden Polymeren von 135°C bis 190°C und eine Vorwärmung des Rohrmaterials auf 100 bis 140°C erforderlich.

Vorzugsweise werden bei dem erfindungsgemäßen Verfahren zur Herstellung von Spritzgusserzeugnissen aus Triazinsegmente enthaltenden Polymeren Spritzgussmaschinen mit Spritzeinheiten eingesetzt, die Dreizonenschnecken mit einer Schneckenlänge von 18 bis 24 D besitzen. Die Einspritzgeschwindigkeit bei der Herstellung der durch Spritzgiessen erzeugten Formteile soll möglichst hoch eingestellt werden, um Einfallstellen und schlechte Bindenähte auszuschließen.

Bei der Herstellung von Fasererzeugnissen aus Triazinsegmente enthaltenden Polymeren werden zur gleichmäßigen Schmelzedosierung der im Plastifizierextruder aufgeschmolzenen Formmassen über den Schmelzeverteiler zum Kapillarwerkzeug bevorzugt Diphenyl-beheizte Schmelzepumpen für die auf 120-180°C erhitzten Schmelzen eingesetzt.

Die Herstellung von Filamentgarnen aus Triazinsegmente enthaltenden Polymeren kann in Kurzspinnanlagen durch Abzug der Fäden mit Hilfe schnelllaufender Galetten mit Fadenabzugsgeschwindigkeiten auf 60 bis 450 m/min und Weiterverarbeitung in Nachfolgeeinrichtungen aus Härtungskammer, Reckeinrichtung und Wickler erfolgen.

Fasern oder Vliese als Erzeugnisse aus Triazinsegmente enthaltenden Polymeren können ebenfalls nach dem Melt-Blow-Verfahren durch Applizierung eines hocherhitzten Luftstroms um die Kapillardüsenöffnungen bei der Extrusion der Fäden aus dem Kapillarwerkzeug in den Blasschacht hergestellt werden. Der Luftstrom verstreckt den geschmolzenen Faden unter gleichzeitiger Zerteilung in viele Einzelfäserchen mit Faserdurchmessern von 0,5 bis 12 µm. Eine Weiterverarbeitung der auf dem Siebtransportband abgelegten Fasern zu Vliesen kann durch Applikation von Thermobondier- oder Vernadelungsprozessen zur Erzielung der erforderlichen Festigkeit und Dimensionsstabilität erfolgen.

Faserverstärkte Kunststoffe nach dem Harzinfusionsverfahren können durch Imprägnierung der Faserhalbzeuge durch die unter Umgebungsdruck stehende Schmelze der Formmasse aus Triazinethern, die in den evakuierten Vakuumsack gedrückt wird, unter Einsatz einer offenen Form hergestellt werden.

Flächige oder komplex geformte Bauteile nach dem Harzinjektionsverfahren werden durch Einlegen von Preforms aus nichtimprägnierten Textilien in eine verriegelbare Form, Injizierung der Schmelze der Formmasse aus Triazinethern, und Aushärtung hergestellt.

Rotationssymmetrische Bauteile nach dem Wickelverfahren, komplexe Bauteile nach der Rundflechttechnik oder Profile nach der Pultrusionstechnik lassen sich durch Tränkung der Faserrohlinge in Form von Rohren, Fittings, Behältern oder Profilen mit der Schmelze der Formmasse aus Triazinethern herstellen.

Bevorzugt werden Fasererzeugnisse aus Triazinsegmente enthaltenden Polymeren in Form von Faserfibriden durch
- Eintrag der Schmelze über Eintragsdüsen bei Schmelzetemperaturen von 105 bis 130°C in eine Scherfeldkammer, die auf 95 bis 135°C erhitzte hochsiedende organische Dispergiermittel, bevorzugt Paraffinöl oder Motorenöl, enthält, wobei in die Scherfeldkammer saure Gase, bevorzugt Chlorwasserstoff oder Schwefeldioxid, eingeleitet werden, und wobei der aus der Eintragsdüse austretende Schmelzestrang durch das vom Rotor verwirbelte Öl unter Faserbildung verstreckt und zerteilt wird,
- Überführung der Dispersion der gebildeten Faserfibride in organischen Dispergiermitteln in einen Siebabscheider unter gleichzeitiger Extraktion der hochsiedenden Dispergiermittel mit niedrigsiedenden Kohlenwasserstoffen, bevorzugt Hexan oder Heptan,
- Austrag des Faserfibrid-Kurzfaservlieses und gegebenenfalls thermische Nachvernetzung des Kurzfaservlieses bei Temperaturen von 180 bis 210°C und Verweilzeiten von 40 bis 120 min,
hergestellt.

Die Erzeugnisse aus Triazinsegmente enthaltenden Polymeren sind insbesondere für Anwendungen mit hohen Anforderungen an Flammfestigkeit und Wärmebeständigkeit im Bauwesen, Maschinenbau und Fahrzeugindustrie, bevorzugt in Form von Schaumplatten als Isolationsbauteile, in Form von Platten als Verkleidungselemente, in Form von Rohren und Hohlprofilen in der Lüftungstechnik, in Form von Spritzgussteilen als Funktionsteile sowie in Form von Fasern bevorzugt zur Herstellung von Elektroisolationspapieren, Feuerschutzkleidung, Kleidung für hohe Arbeitstemperaturen, Brandschutzdecken, Filtervliesen, Filzen für Papiermaschinen sowie Fahrzeug- bzw. Maschinen-Isolationsabdeckungen, in Form von faserverstärkten Kunststoffbauteilen nach dem Harzinfusionsverfahren, in Form von Sandwichbauteilen nach dem Harzinjektionsverfahren sowie in Form komplexer Bauteile, Behälter oder Profile nach dem Wickel-, Flecht- oder Pultrusionsverfahren.

Die Erfindung wird durch folgende Beispiele erläutert :

### Beispiel 1

In einer ersten Verfahrensstufe werden 4,8 kg eines pulverförmigen Melamin-Formaldehyd-Vorkondensats (Lamelite 200, Agrolinz Melamin) über eine Dosierbandwaage in einen 50 I - Rührreaktor, in dem 12 kg Methanol und 320 ml konzentrierte Salzsäure vorgelegt sind, bei 32°C unter Rühren über einen Zeitraum von 2 Std. eingestreut. Nach vollständiger Auflösung des Vorkondensats wird noch eine weitere Stunde bei 35°C gerührt, der Reaktionsansatz mit 20% methanolischer KOH auf einen pH-Wert von 9,5 eingestellt und das Methanol-Wasser-Gemisch bei 30 bis 80°C/15 mbar abdestilliert. Zum Rückstand werden 27 l Butanol hinzugefügt, der pH-Wert mit Salzsäure auf pH=5 eingestellt, und die Reaktionsmischung wird stufenweise von 95 auf 115°C erwärmt, bis das abgespaltene Methanol abdestilliert ist.

Nach Abkühlung auf 80°C wird in der zweiten Verfahrensstufe zur Reinigung des veretherten Vorkondensats das in der ersten Verfahrensstufe hergestellte veretherte und partiell umgeetherte Vorkondensat mit 20% methanolischer KOH auf einen pH-Wert von 10,2 eingestellt und die ausgefallenen Salze in einer Drucknutsche abgetrennt. Die butanolische Lösung des partiell veretherten Vorkondensats wird in einen Labor-Filmverdampfer mit Austragsschnecke überführt und Butanol bis auf einen Restanteil von 14% abgetrieben.

In der dritten Verfahrensstufe wird zur Kondensation der Aminotriazinether zu Oligotriazinethem die Schmelze 30 min bei 90°C temperiert und das aufkonzentrierte Flüssigharz mittels einer Dosierpumpe in einen Leistritz-Doppelschneckenextruder Typ Micro 27-44 D mit gegenläufigen Schnecken und drei Entgasungszonen dosiert. Das Flüssig-harz wird im Extruder zunächst bei einer Massetemperatur von 140°C/40 mbar entgast und anschließend bei einer Massetemperatur von 185°C unter Vakuum nachkondensiert. Nach einer Verweilzeit im Extruder von 6 min wird der Oligotriazinether mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Die resultierenden Pastillen des Oligotriazinethergemischs sind in Dimethylsulfoxid vollständig löslich. GPC-Untersuchungen ergeben ein Molmassen-Gewichtsmittel von 1620.

NMR-Untersuchungen ergaben, dass das Oligotriazinethergemisch aus 84 Masse% linear verknüpften Aminotriazinethern und 16 Masse% unter Kettenverzweigung verknüpften Aminotriazinethem bestehen. Die Brückenglieder zwischen den Triazinringen bei linearer Verknüpfung bilden überwiegend -NH-CH₂NH- - und in geringerem Umfang -NH-CH₂-O-CH₂-NH- - Einheiten, daneben liegen in sehr geringem Umfang -N(CH₂-OC₄H₉)-CH₂-NH- bzw. -N(CH₂-OCH₃)- CH₂-O-CH₂-NH- - Einheiten als Brückenglieder vor.

Als Brückenglieder mit Kettenverzweigung wurden Brückenglieder vom Typ 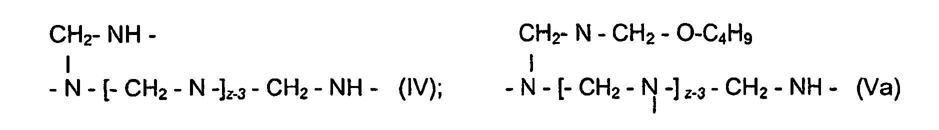 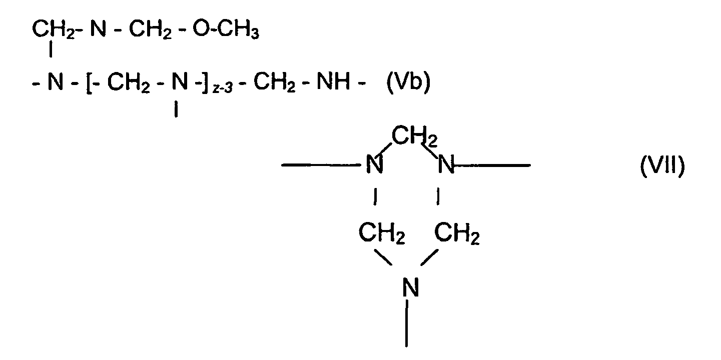 und in geringerem Umfang 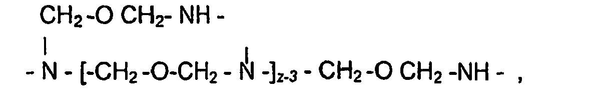 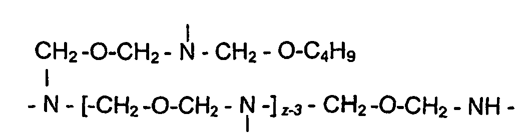 bzw. 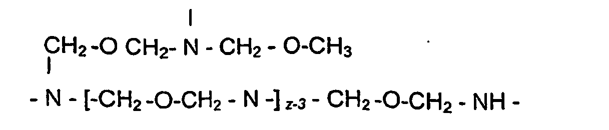 NMR-spektroskopisch identifiziert. Das Verhältnis Butylethergruppen/Methylethergruppen beträgt rd. 1 : 1.

### Beispiel 2

In einer vorgelagerten Reaktionsstufe werden zur Herstellung des Vorkondensats in einen 50 l- Rührreaktor, der 2,4 kg Methanol enthält, 5,16 kg Paraformaldehyd und 2,4 kg Wasser dosiert, durch Zugabe von 0,1 n methanolischer KOH ein pH-Wert von 8,2 eingestellt und 30 min bei 50°C gerührt. Zur Suspension werden 4,4 kg Melamin und 0,7 kg Acetoguanamin hinzugefügt, 10 min auf 71°C erwärmt und weitere 10 min unter Temperaturerhöhung auf 75°C gerührt.

Nach Abkühlung auf 57°C werden in der ersten Verfahrensstufe zur Veretherung des in der vorgelagerten Reaktionsstufe hergestellten Vorkondensats weitere 12 kg Methanol zugegeben, der Reaktionsansatz mit konzentrierter Salzsäure auf einen pH-Wert von 4,7 eingestellt und weitere 45 min bei dieser Temperatur gerührt.

In einem zweiten Schritt der ersten Verfahrensstufe wird das partiell veretherte Vorkondensat mit 20% methanolischer KOH auf einen pH-Wert von 10,2 eingestellt und Methanol und Wasser bei 80°C/50 mbar abdestilliert. Der Reaktionsansatz wird unter Zugabe von 12 kg Methanol aufgelöst, mit konzentrierter Salzsäure auf einen pH-Wert von 4,5 eingestellt und 1 Std. bei 55°C verethert. Nach Einstellung auf einen pH-Wert von 9,5 mit 20% methanolischer KOH wird bei 80°C/10 mbar eingeengt.

Zur Reinigung wird die Schmelze in der zweiten Verfahrensstufe in 6 kg Butanol gelöst und die ausgefallenen Salze in einer Drucknutsche abgetrennt. Die butanolische Lösung des veretherten Vorkondensats wird in einen Labor-Filmverdampfer mit Austragsschnecke überführt und Butanol bis auf einen Restanteil von 12% abgetrieben.

In der dritten Verfahrensstufe wird zur Kondensation der Aminotriazinether zu Oligotriazinethem die Schmelze 20 min bei 100°C temperiert und das aufkonzentrierte Flüssigharz mittels einer Dosierpumpe in einen Leistritz-Doppelschneckenextruder Typ Micro 27-44 D mit gegenläufigen Schnecken und drei Entgasungszonen dosiert. Das Flüssigharz wird im Extruder zunächst bei einer Massetemperatur von 140°C/50 mbar entgast und anschließend bei einer Massetemperatur von 190°C unter Vakuum nachkondensiert.

Nach einer Verweilzeit im Extruder von 6,5 min wird der Oligotriazinether mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Die resultierenden Pastillen des Oligotriazinethergemischs sind in Dimethylsulfoxid vollständig löslich. GPC-Untersuchungen ergeben ein Molmassen-Gewichtsmittel von 1450. NMR-Untersuchungen ergaben, dass das Oligotriazinethergemisch aus 88 Masse% linear verknüpften Aminotriazinethern und 12 Masse% unter Kettenverzweigung verknüpften Aminotriazinethern bestehen. Die Brückenglieder zwischen den Triazinringen bei linearer Verknüpfung bilden überwiegend -NH-CH₂-NH- - und in geringerem Umfang -NH-CH₂-O-CH₂-NH- - Einheiten, daneben liegen in sehr geringem Umfang -N(CH₂-OCH₃)-CH₂-NH- - Einheiten als Brückenglieder vor.

Als Brückenglieder mit Kettenverzweigung wurden Brückenglieder vom Typ 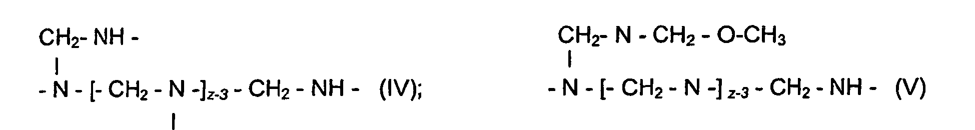 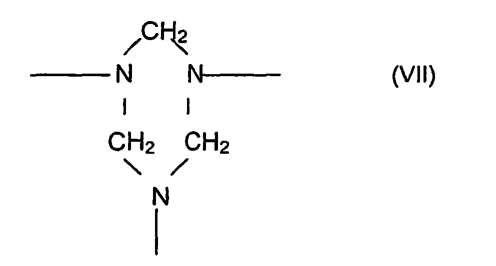 sowie in geringerem Umfang 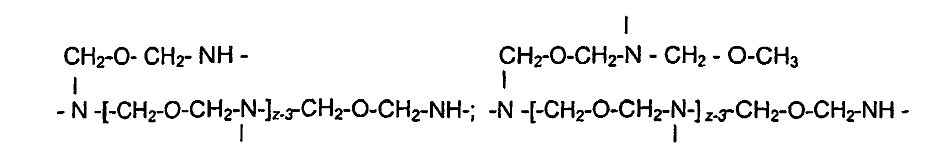 NMR-spektroskopisch identifiziert.

### Beispiel 3

in einer vorgelagerten Reaktionsstufe werden zur Herstellung des Vorkondensats in einen 20 l - Rührreaktor, der 2,4 kg Methanol enthält, 4,8 kg Paraformaldehyd, 0,35 kg Trimethylacetaldehyd und 2,2 kg Wasser dosiert, durch Zugabe von 0,1 n methanolischer KOH ein pH-Wert von 8,2 eingestellt und 40 min bei 35°C gerührt. Zur Suspension werden 4,4 kg Melamin und 0,9 kg Benzoguanamin hinzugefügt, 20 min auf 70°C erwärmt und weitere 15 min unter Temperaturerhöhung auf 75°C gerührt. Nach Abkühlung auf 55°C wird die alkalische Lösung kontinuierlich in ein mit Ionenaustauscher gefülltes Strömungsrohr gefördert, neutralisiert und in einen 40 l - Rührreaktor überführt.

In der ersten Verfahrensstufe werden für die Veretherung zu dem in der vorgelagerten Reaktionsstufe hergestellten Vorkondensat weitere 13 kg Methanol zugegeben, auf 57°C erwärmt, der Reaktionsansatz mit konzentrierter Salzsäure auf einen pH-Wert von 4,9 eingestellt und eine weitere Stunde bei dieser Temperatur gerührt.

In einem zweiten Schritt der ersten Verfahrensstufe wird das partiell veretherte Vorkondensat mit 20% methanolischer KOH auf einen pH-Wert von 10,0 eingestellt und Methanol und Wasser bei 80°C/50 mbar abdestilliert. Der Reaktionsansatz wird unter Zugabe von 11 kg Methanol aufgelöst, mit konzentrierter Salzsäure auf einen pH-Wert von 4,3 eingestellt und 1 Std. bei 55°C verethert. Nach Einstellung auf einen pH-Wert von 9,7 mit 20% methanolischer KOH wird bei 80°C/10 mbar eingeengt.

Zur Reinigung wird die Schmelze in der zweiten Verfahrensstufe in 6,5 kg Isobutanol gelöst und die ausgefallenen Salze in einer Drucknutsche abgetrennt. Die Lösung des veretherten Vorkondensats wird in einen Labor-Filmverdampfer mit Austragsschnecke überführt und Isobutanol bis auf einen Restanteil von 10% abgetrieben.

In der dritten Verfahrensstufe wird zur Kondensation der Aminotriazinether zu Oligotriazinethem die Schmelze 15 min bei 110°C temperiert und das aufkonzentrierte Flüssigharz mittels einer Dosierpumpe mit 2,2 kg/Std. in einen Leistritz-Doppelschneckenextruder Typ Micro 27-44 D mit gegenläufigen Schnecken und drei Entgasungszonen dosiert. Das Flüssigharz wird im Extruder zunächst bei einer Massetemperatur von 140°C/50 mbar entgast und anschließend unter Eindosierung einer Mischung aus 50% Ethylen-Butylacrylat-Hydroxyethylacrylat-Copolymer (Molverhältnis 3:2:1), 48% Glasfasern, 1 % Ammonchlorid und 1 % Bis-2,2,6,6-tetramethyl-4-piperidylsebazat mit 1,4 kg/Std. bei einer Massetemperatur von 195°C unter Vakuum nachkondensiert. Nach einer Verweilzeit im Extruder von 6,5 min wird der Oligotriazinether mittels Schmelzezahnradpumpe (Typ extrex SP, Maag pump systems) in eine Pastillierungsanlage gefördert und in Pastillen ausgeformt.

Die resultierenden Pastillen des Oligotriazinethercompounds werden in einer Spritzgießmaschine bei einer Massetemperatur von 230°C zu Normprüfstäben verarbeitet. Die mechanische Ausprüfung ergibt einen Biegemodul von 3600 MPa und eine Kerbschlagzähigkeit von 12 kJ/m².

### Beispiel 4

In einem 30 I-Rührreaktor mit Bodenablassventil wird eine Mischung aus 10,8 kg Butanol, 4 kg 30% Formalinlösung, 1,5 g-Äquivalente eines Ionenaustauschers auf Basis eines chlormethylierten und mit Trimethylolamin-aminierten Styren-Divinylbenzen-Copolymers (Gehalt an Divinylbenzen 12 Masse%, mittlere Partikelgrösse 0,55 mm), und 2,1 g-Äquivalente eines Ionenaustauschers auf Basis eines sulfonierten Styren-Divinylbenzen-Copolymers (Gehalt an Divinylbenzen 9 Masse%, mittlere Partikelgrösse 0,65 mm) unter Rühren auf 95°C erwärmt und nachfolgend eine Mischung aus 1,51 kg Melamin und 0,55 kg Butyroguanamin über eine Dosierbandwaage über einen Zeitraum von 20 min in den Reaktor dosiert. Nach weiteren 60 min Rühren bei 95°C wird der Rührer ausgelegt, wobei Phasentrennung in eine untere wässrige Schicht, die die Ionenaustauscher enthält, und eine obere Schicht mit der butanolischen Lösung des Aminoriazinethergemischs erfolgt.

Nach Austrag der unteren Schicht mit den Ionenaustauschern wird die butanolische Lösung in einen Labor-Filmverdampfer mit Austragsschnecke überführt und Butanol bis auf einen Restanteil von 9% abgetrieben.

Zur Kondensation des Aminotriazinethergemischs zu Oligotriazinethern wird die Schmelze 20 min bei 110°C temperiert und das aufkonzentrierte Flüssigharz mittels einer Dosierpumpe in einen Leistritz-Doppelschneckenextruder Typ Micro 27-44 D mit gegenläufigen Schnecken und drei Entgasungszonen dosiert. Das Flüssigharz wird im Extruder zunächst bei einer Massetemperatur von 145°C/30 mbar entgast und anschließend bei einer Massetemperatur von 195°C unter Vakuum nachkondensiert. Nach einer Verweilzeit im Extruder von 7 min wird der Oligotriazinether mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Die resultierenden Pastillen des Oligotriazinethergemischs sind in Dimethylsulfoxid vollständig löslich. GPC-Untersuchungen ergeben ein Molmassen-Gewichtsmittel von 3050.
NMR-Untersuchungen ergaben, dass das Oligotriazinethergemisch aus 91 Masse% linear verknüpften Aminotriazinethem und 9 Masse% unter Kettenverzweigung verknüpften Aminotriazinethem bestehen. Die Brückenglieder zwischen den Triazinringen bei linearer Verknüpfung bilden überwiegend -NH-CH₂-NH- - Einheiten, daneben liegen in sehr geringem Umfang -N(CH₂-OC₄H₉)-CH₂-NH- - Einheiten als Brückenglieder vor.
Als Brückenglieder mit Kettenverzweigung wurden Brückenglieder vom Typ 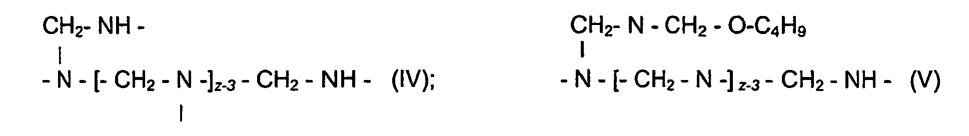 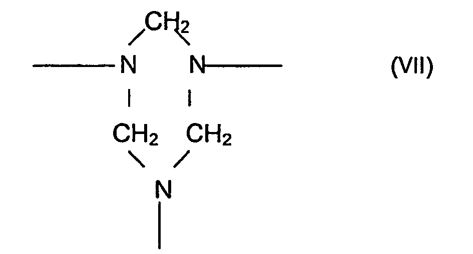 NMR-spektroskopisch identifiziert.

Brückenglieder der Struktur
-NH-CH₂-O-CH₂-NH- ; -N(CH₂-OC₄H₉)-CH₂-O-CH₂-NH- sowie 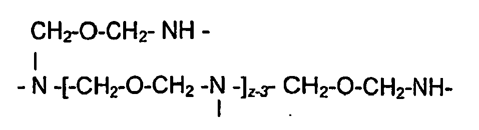 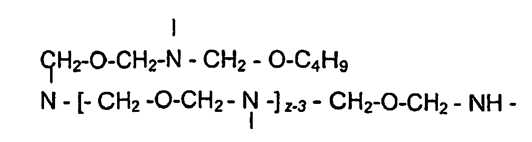 lagen im Bereich der Nachweisgrenze.

### Beispiel 5 Herstellung von Verbundkunststoffen

### 5.1 Herstellung der Formmasse aus Oligotriazinethern

In einer ersten Verfahrensstufe werden 4,8 kg eines pulverförmigen Melamin-Formaldehyd-Vorkondensats (Lamelite 200, Agrolinz Melamin) über eine Dosierbandwaage in einen 50 I - Rührreaktor, in dem 12 kg Methanol und 320 ml konzentrierte Salzsäure vorgelegt sind, bei 32°C unter Rühren über einen Zeitraum von 2 Std. eingestreut. Nach vollständiger Auflösung des Vorkondensats wird noch eine weitere Stunde bei 35°C gerührt, der Reaktionsansatz mit 20% methanolischer KOH auf einen pH-Wert von 9,5 eingestellt und das Methanol-Wasser-Gemisch bei 50 bis 80°C/15 mbar abdestilliert. Zum Rückstand werden 27 l Butanol hinzugefügt, der pH-Wert mit Salzsäure auf pH=5 eingestellt, und die Reaktionsmischung wird stufenweise von 95 auf 115°C erwärmt, bis das abgespaltene Methanol abdestilliert ist.

Nach Abkühlung auf 80°C wird in der zweiten Verfahrensstufe zur Reinigung des veretherten Vorkondensats das in der ersten Verfahrensstufe hergestellte veretherte und partiell umgeetherte Vorkondensat mit 20% methanolischer KOH auf einen pH-Wert von 10,2 eingestellt und die ausgefallenen Salze in einer Drucknutsche abgetrennt. Die butanolische Lösung des partiell veretherten Vorkondensats wird in einen Labor-Filmverdampfer mit Austragsschnecke überführt und Butanol bis auf einen Restanteil von 14% abgetrieben.

In der dritten Verfahrensstufe wird zur Kondensation der Aminotriazinether zu Oligotriazinethem die Schmelze 30 min bei 90°C temperiert und das aufkonzentrierte Flüssigharz mittels einer Dosierpumpe in einen Leistritz-Doppelschneckenextruder Typ Micro 27-44 D mit gegenläufigen Schnecken und drei Entgasungszonen dosiert. Das Flüssigharz wird im Extruder zunächst bei einer Massetemperatur von 140°C/100 mbar entgast und anschließend bei einer Massetemperatur von 185°C unter Vakuum nachkondensiert. Nach einer Verweilzeit im Extruder von 6 min wird der Oligoaminotriazinether mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

### 5.2 Prepreg-Herstellung

80 Masse% MF-Harz-Pastillen werden zusammen mit 20 Masse% Polyethylenglycol (Molmasse 1000) bei 110°C geschmolzen, intensiv gemischt und in eine 110°C heiße Temperierwanne gegeben. In die Schmelze werden Cellulosefaser-Vliese (Lyocellfasem, Lenzing AG) getaucht. Nachdem diese vollständig innerhalb 10 min benetzt sind, werden die Vliese aus der Schmelze über einen Abstreifer gezogen, um überschüssiges Harz zu entfernen. Anschließend werden die benetzten Vliese in einem Kaltluftstrom zum Erstarren gebracht. Die so hergestellten Prepregs besitzen einen Harzauftrag von 35 Masse% bezogen auf die Gesamtmasse Prepreg.

### 5.3 Herstellen von 3D-Profil-Laminaten

Die Prepregs werden auf eine Größe von 30x20 cm zugeschnitten. Zur Herstellung eines Formteils mit gebogenen Kanten im Sinne eines U-Profils werden 3 Prepregs übereinander in eine auf 80°C vorgeheizte Pressform (30x20cm) gelegt und die Presse langsam zugefahren, wobei sich die Prepregs auf Grund des noch nicht ausgehärteten Harzes leicht verformen lassen. Unter einem Druck von 150 bar wird die Temperatur auf 180°C erhöht, 15 min gepresst und die Presse auf 70°C rückgekühlt. Das fertige Werkstück wird entnommen und der entstandene Grat durch austretendes Harz an der Tauchkante des Presswerkzeuges abgeschliffen.

Aus dem Werkstück herausgefräste Probekörper besitzen eine Zugfestigkeit von 45 MPa, eine Kerbschlagzähigkeit von 0,3 J/cm² und eine lineare Schwindung von 0,012 cm/cm.

### Beispiel 6 Herstellung von Aminharz-Glasfaser-Verbunden

### 6.1 Herstellung der Formmasse aus Oligotriazinethern

In einer vorgelagerten Reaktionsstufe werden zur Herstellung des Vorkondensats in einen 50 I - Rührreaktor, der 2,4 kg Methanol enthält, 5,16 kg Paraformaldehyd und 2,4 kg Wasser dosiert, durch Zugabe von 0,1 n methanolischer KOH ein pH-Wert von 8,2 eingestellt und 30 min bei 50°C gerührt. Zur Suspension werden 4,4 kg Melamin und 0,7 kg Acetoguanamin hinzugefügt, 10 min auf 71°C erwärmt und weitere 10 min unter Temperaturerhöhung auf 75°C gerührt.

Nach Abkühlung auf 57°C werden in der ersten Verfahrensstufe zur Veretherung des in der vorgelagerten Reaktionsstufe hergestellten Vorkondensats weitere 12 kg Methanol zugegeben, der Reaktionsansatz mit konzentrierter Salzsäure auf einen pH-Wert von 4.7 eingestellt und weitere 45 min bei dieser Temperatur gerührt.

In einem zweiten Schritt der ersten Verfahrensstufe wird das partiell veretherte Vorkondensat mit 20% methanolischer KOH auf einen pH-Wert von 10,2 eingestellt und Methanol und Wasser bei 80°C/50 mbar abdestilliert. Der Reaktionsansatz wird unter Zugabe von 12 kg Methanol aufgelöst, mit konzentrierter Salzsäure auf einen pH-Wert von 4,5 eingestellt und 1 Std. bei 55°C verethert. Nach Einstellung auf einen pH-Wert von 9,5 mit 20% methanolischer KOH wird bei 80°C/10 mbar eingeengt.

Zur Reinigung wird die Schmelze in der zweiten Verfahrensstufe in 6 kg Butanol gelöst und die ausgefallenen Salze in einer Drucknutsche abgetrennt. Die butanolische Lösung des veretherten Vorkondensats wird in einen Labor-Filmverdampfer mit Austragsschnecke überführt und Butanol bis auf einen Restanteil von 12% abgetrieben.

In der dritten Verfahrensstufe wird zur Kondensation der Aminotriazinether zu Oligotriazinethem die Schmelze 20 min bei 100°C temperiert und das aufkonzentrierte Flüssigharz mittels einer Dosierpumpe in einen Leistritz-Doppeischneckenextruder ßtyp Micro 27-44 D mit gegenläufigen Schnecken und drei Entgasungszonen dosiert. Das Flüssigharz wird im Extruder zunächst bei einer Massetemperatur von 140°C/100 mbar entgast und anschließend bei einer Massetemperatur von 190°C nachkondensiert. Die dabei entstehenden niedermolekularen Kondensationsprodukte werden unter Vakuum entfernt. Das nachkondensierte Harz wird direkt in einen zweiten Extruder gefördert (Kaskadenprinzip) und auf 120°C gekühlt. Über eine Seitendosierung werden 5 Masse% Zeolith (Molekularsieb 5A, UOP GmbH) und 8 Masse% Na-Montmorillonit (Südchemie AG), jeweils bezogen auf das nachkondensierte Harz, zugegeben. Abschliessend wird das Harz mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

### 6.2 Herstellung des Aminharz-Glasfaser-Verbunds

Zur Herstellung Endlosglasfaser-verstärkter Aminharz-Platten werden die Pastillen in einem Extruder aufgeschmolzen und über eine Breitschlitzdüse in ein Glasfaservlies (105 g/m²) gepresst. Dieses wird zusammen mit zwei weiteren auf diese Art vorbehandelten Glasfaservliesen über eine Heizkammer mit 100°C in eine Doppelbandpresse geführt und bei 180°C und einem Druck von 30 bar verpresst. Das fertige Verbund wird konfektioniert und Normprüfstäbe ausgefräst.

Die mechanische Prüfung ergab eine Zugfestigkeit von 80 MPa, eine Kerbschlagzähigkeit von 0,4 J/cm² sowie eine Wassersorption von 0,5% und eine lineare Schwindung von 0,001 cm/cm.

### Beispiel 7 Herstellung von Rohren

In einen Leistritz-Doppelschnecken-Extruder ZSK 27, UD=44 mit gleichläufigen Schnecken, Dosiereinrichtung für Fasermaterialien im 4. Zylinder und einer Dekompressionszone für Vakuumentgasung, Temperaturprofil 20/120/120/120/120/120/120/120/140/160°C, werden in die Einzugszone mit 9 kg/h MF-Harz-Pastillen entsprechend Beispiel 1, mit 4,5 kg/h Granulat aus Ethylen-Vinylacetat-Copolymer (Schmelzindex 18g/10min bei 190°C/2,19 kp, Vinylacetatgehalt 17 Masse%), mit 0,75 kg/h Zeolith (Molekularsieb 5A, UOP GmbH) und mit 0,75 kg/h fluoriertes Schichtsilikat (Somasif ME 100, Uni-Coop, Japan) dosiert. Nach Mischung und Homogenisierung der Komponenten werden im 4. Zylinder Cellulosefasern in Form von Kardenband zugeben, indem sie direkt von einer Spule abgewickelt und vom Extruder selbst eingezogen werden. Nach Zerkleinerung der Fasern, intensiver Homogenisierung und Kondensation wird die Mischung in ein Siebdorn-Rohrwerkzeug, welches mehrstufig dielektrisch auf einen Temperaturgradienten von 160-195°C beheizt ist, als rundes Hohlprofil ausgetragen.
Das Rohr zeichnet sich durch eine glatte Oberfläche aus und enthält als Füllstoff neben den Silikaten unterschiedlich lange Cellulosefasern.

Wird die Mischung anstelle durch das Siebdorn-Rohrwerkzeug durch ein Profilwerkzeug 10 x 4mm ausgetragen, so besitzen aus dem Profil hergestellte Normprüfstäbe eine Zugfestigkeit von 42 MPa und eine Kerbschlagzähigkeit von 0,47 J/cm².

### Beispiel 8 Herstellung von Spritzgiessformteilen

### 8.1 Herstellung der Formmasse

In einen Leistritz-Doppelschnecken-Extruder ZSK 27, UD=44, mit gleichläufigen Schnecken, Seitenstromdosiereinrichtung für pulverförmige Medien im 4. Zylinder und einer Dekompressionszone für Vakuumentgasung, Temperaturprofil 20/120/120/120/120/120/120/120/120/100°C, werden in die Einzugszone mit 7,5 kg/h MF-Harz-Pastillen entsprechend Beispiel 1 , mit 1,5 kg/h Glasfaserschnitzel (Aminosilanschlichte, Faserquerschnitt 17 µm, Faserlänge 3mm) und mit 1,0 kg/h handelsüblicher Nitril-Kautschuk dosiert. Über die Seitenstromdosiereinrichtung im 4. Zylinder wird ein Gemisch aus 40 Masse% Zeolith (Molekularsieb 13X, UOP GmbH) und 60 Masse% Na-Montmorillonit (Südchemie AG, Deutschland) mit 1,0 kg/h zugegeben. Nach intensiver Homogenisierung wird die Mischung ausgetragen und granuliert.

### 8.2 Herstellung von Formteilen mittels Spritzgiess-Technik

Das Granulat wird mit einer Spritzgießmaschine zu Verbundplatten verarbeitet. Im Förderteil wird eine Temperatur von 110°C eingestellt. Die Temperatur der Spritzgusskammer liegt bei ca. 150°C, und es wurde ein Spritzdruck von ca. 100 N/cm² eingestellt, der während des Härtevorgangs geringfügig absinkt. Nach einer Verweilzeit von 5 min ist das Werkstück ausgehärtet und kann nach Abkühlung entnommen werden.

Die entstehenden Verbundplatten besitzen hinsichtlich Kratzfestigkeit die gewohnten Eigenschaften eines Melamin-Formaldehyd-Harzes und sind wasserdampf- und chemikalienresistent. Ausgefräste Normstäbe haben eine Zugfestigkeit von 62 MPa, eine Kerbschlagzähigkeit von 0,63 J/cm² und eine Bruchdehnung von 4,1 %.

### Beispiel 9 Herstellung von fasergefüllten Profilstäben

In einen Leistritz-Doppelschnecken-Extruder ZSK 27, UD=44 mit gleichläufigen Schnecken, Seitenstromdosiereinrichtung für pulverförmige Medien im 4. Zylinder und einer Dekompressionszone für Vakuumentgasung, Temperaturprofil 20/120/120/120/120/120/120/120/140/160°C, werden in die Einzugszone mit 6,7 kg/h MF-Harz-Pastillen nach

Beispiel 1, mit 0,7 kg/h eines mit Polyethylenoxidmonoethylether (Molmasse 2500) modifizierten Maleinsäureanhydrid-Isobuten-α-Methylstyren - Terpolymers (Molverhältnis 2 : 1 : 1,5; Molmassen-Gewichtsmittel Terpolymer rd. 17200, Umsetzungsgrad Anhydridgruppen im Terpolymer 60 Mol%), mit 1,3 kg/h Cellulosekurzfasern (3 mm) und mit 1,3 kg/h Polyamidkurzfasern (3 mm) dosiert. Über die Seitenstromdosiereinrichtung im 4. Zylinder wird mit 1 kg/h ein Gemisches aus 20 Masse% Köstrosorb 1008 (Chemiewerk Bad Köstritz, Deutschland) und 80 Masse% ein mit als Hydrochlorid eingesetztem Amindiol (Simulsol ADM 27, Seppic S.A., Paris, Frankreich) organisch modifizierter Na-Montmorillonit zugegeben. Nach intensiver Homogenisierung und Kondensation wird die Mischung in einer Profildüse zu einem Vollprofil geformt und nach Aushärtung konfektioniert.

Entsprechende Normprüfstäbe ergaben eine Zugfestigkeit von 46 MPa, eine Bruchdehnung von 3,7% und eine Kerbschlagzähigkeit von 0,73 J/cm².

### Beispiel 10 Herstellung eines MF-Schaumstoffs

1000g MF-Harz-Pastillen nach Beispiel 1 werden in 800g Methanol-Wasser-Gemisch (Volumenverhältnis 1:1) gelöst. Der Harzlösung werden unter intensiver Mischung mittels Ultraturrax 30g eines nichtionischen Tensides (Copolymer Ethylenoxid/Propylenoxid, Molverhältnis 1:1), 300g Pentan als Treibmittel, 10 g Ammonchlorid als 20% wässrige Lösung sowie 100g einer 50% wässrigen Lösung eines Vinylacetat-Hydroxyethylacrylat-Copolymers (Molverhältnis 2:1) unter Kühlung zugegeben.
Die Dispersion wird mit einer Zahnradpumpe in einen statischen Mischer gefördert, in dem sie unter hohem Druck auf 180 °C erwärmt wird. Über eine Breitschlitzdüse wird die Dispersion entspannt. Durch die Entspannung schäumen die verdampften Lösungsmittel das Harzgemisch auf und durch weitere Erwärmung (dielektrisch) auf 200°C erfolgt das vollständige Aushärten des Harzes.

Der Schaum wird anschließend konfektioniert und besitzt eine Dichte von ca. 30 kg/m³.

### Beispiel 11 Herstellung von Endlosfasern

Das Harzgranulat entsprechend Beispiel 1 wird in einem Laborextruder aufgeschmolzen und auf 120°C erwärmt.

Die Schmelze wird bei konstanter Temperatur zur Einzugsöffnung einer Spinnpumpe gefördert. Mit der Spinnpumpe wird der für die Durchströmung eines Schmelzefilters und einer Spinndüse mit 6 Löchern erforderliche Vordruck aufgebaut. Die Harzschmelze wird bei einer Abzugsgeschwindigkeit von 1300 m/min in einem von erwärmten Stickstoff durchströmten Abzugsschacht auf einen Fadendurchmesser von 8 - 10 µm ausgezogen und abgekühlt.

Nach Erstarren des Harzes werden die Fasern in einem zweiten Abschnitt des Abzugschachtes in saurer Atmosphäre (trockener HCI) vollständig ausgehärtet und auf übliche Weise konfektioniert.

## Patentansprüche

1. Erzeugnisse, insbesondere Formmassen aus Triazinsegmente enthaltenden Polymeren, **dadurch gekennzeichnet, dass** die Triazinsegmente enthaltenden Polymere Mischungen aus schmelzbaren 4- bis 18-Kern-Oligotriazinethern auf Basis von Triazinethern, insbesondere Aminotriazinethem der Struktur 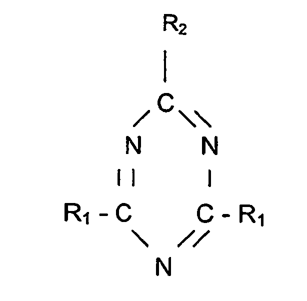 R₁ = R₄-O-CHR₃-NH- ; [R₄-O-CHR₃]₂N-
R₂ = -NH₂, -NH-CHR₃-OR₄, -N[CHR₃-O-R₄]₂, -CH₃, -C₃H₇, -C₆H₅, -OH, Phthalimido-. Succinimido-,
R₃ = H oder C₁-C₇ - Alkyl;
R₄ = C₁-C₁₈ - Alkyl; H, sind.

2. Erzeugnisse nach Anspruch 1, **dadurch gekennzeichnet, dass** die Triazinsegmente in den Oligotriazinethern 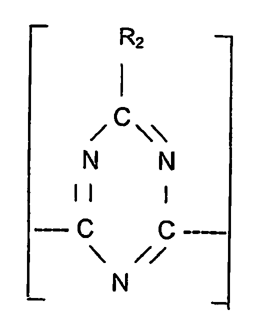 R₂ = -NH₂, -NH-CHR₃-OR₄, -N[CHR₃-O-R₄]₂,-CH₃, -C₃H₇, -C₆H₅, -OH, Phthalimido-. Succinimido-
R₃ = H oder C₁-C₇ - Alkyl;
R₄ = C₁-C₁₈- Alkyl; H, durch Brückenglieder zu 4- bis 18-Kern-Oligotriazinethern mit linearer und/oder verzweigter Struktur verknüpft sind.

3. Erzeugnisse nach Anspruch 2, **dadurch gekennzeichnet**, die Brückenglieder bei linearer Verknüpfung der Triazinringe den Typ I bis III bilden
-NH - X - NH- (I), 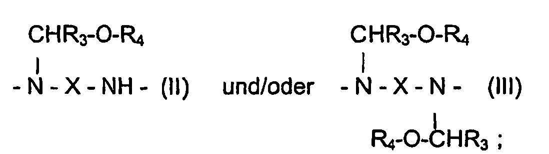
wobei X = CHR3 und gegebenenfalls CHR3 - O - CHR3 ist.

4. Erzeugnisse nach Anspruch 2 oder 3, **dadurch gekennzeichnet, dass** die Brückenglieder bei verzweigter Struktur (*z* > *v* + 2; *z* = Zahl der verknüpften Triazinringe; *v* = Zahl der Verzweigungspunkte) sowohl Brückenglieder von Typ I bis III in den linearen Kettensegmenten als auch Brückenglieder vom Typ IV bis VII in den durchgängig verzweigten Kettensegmenten (*z* = *v* + 2) sind 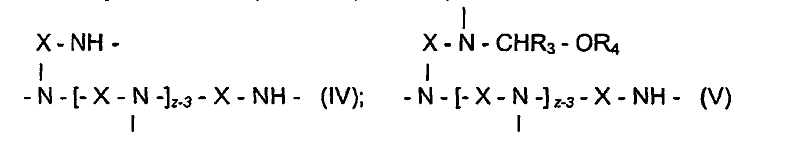 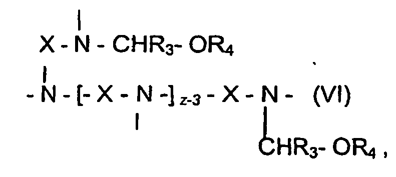 wobei X = CHR₃ und gegebenenfalls CHR₃ - O - CHR₃ ist, 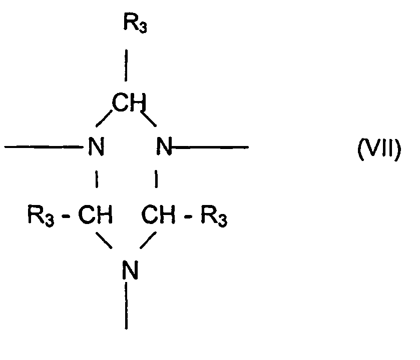 R₃ = H oder C₁-C₇ - Alkyl;
R₄ = C₁-C₁₈ - Alkyl; H,

5. Erzeugnisse nach mindestens einem er vorhergehenden Ansprüche, **dadurch gekennzeichnet, dass** der Substituent R₄ in den Triazinethern, insbesondere Aminotriazinethern oder Oligotriazinethern ausschliesslich C₁-C₁₈ - Alkyl oder überwiegend C₁-C₁₈ - Alkyl ist.

6. Erzeugnisse nach mindestens einem der vorhergehenden Ansprüche, **dadurch gekennzeichnet, dass** in den Oligotriazinethern das Molverhältnis Ethergruppen/Triazinsegmente 1 : 2 bis 4,5 : 1 beträgt.

7. Erzeugnisse nach mindestens einem der vorhergehenden Ansprüche, **dadurch gekennzeichnet, dass** Oligotriazinether, bei denen in den Brückenglieder X = CHR₃ - O - CHR₃ ist, bis zu 35 Masse% in den Formmassen aus Triazinsegmente enthaltenden Polymeren enthalten sind.

8. Erzeugnisse nach mindestens einem der vorhergehenden Ansprüche, **dadurch gekennzeichnet, dass** die Erzeugnisse, insbesondere Formmassen aus Triazinsegmente enthaltenden Polymeren bis zu 75 Masse% Füllstoffe, Adsorbermaterialien und/oder Verstärkungsfasern, bis zu 50 Masse% weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Masse% Stabilisatoren, UV-Absorber und/oder Hilfsstoffe, enthalten.

9. Erzeugnisse nach mindestens einem der vorhergehenden Ansprüche, **dadurch gekennzeichnet, dass** die Oligotriazinether in polaren Lösungsmitteln vom Typ C₁-C₁₀-Alkohole, Dimethylformamid oder Dimethylsulfoxid löslich sind.

10. Erzeugnisse nach mindestens einem der vorhergehenden Ansprüche, **dadurch gekennzeichnet, dass** diese durch thermoplastische Verarbeitung von Formmassen aus Mischungen von schmelzbaren 4- bis 18 Kern-Oligotriazinethern auf der Basis der Struktur gemäß Anspruch 1 hergestellt sind.

11. Erzeugnisse nach mindestens einem der vohergehenden Ansprüche, **dadurch gekennzeichnet, dass** die Oligotriazinether 4- bis 8-Kern-Oligotriazinether sind.

12. Erzeugnisse nach mindestens einem der vorhergehenden Ansprüche, **dadurch gekennzeichnet, dass** die Oligotriazinether in den Mischungen Oligotriazinether mit R₃ = H sind.

13. Erzeugnisse nach mindestens einem der vorhergehenden Ansprüche, **dadurch gekennzeichnet, dass** die Mischungen aus Oligotriazinethern 70 bis 90 Masse% Oligotriazinether in linearer Verknüpfung enthalten.

14. Erzeugnisse nach mindestens einem der vorhergehenden Ansprüche, **dadurch gekennzeichnet, dass** die als weitere reaktive Polymere in den Erzeugnissen, insbesondere Formmassen gegebenenfalls enthaltenen modifizierten Maleinsäureanhydrid-Copolymere partiell oder vollständig veresterte, amidierte bzw. imidierte Maleinsäureanhydrid-Copolymere sind.

15. Erzeugnisse nach mindestens einem der vorhergehenden Ansprüche, **dadurch gekennzeichnet, dass** die Erzeugnisse Halbzeuge, bevorzugt Platten, Rohre, Profile, Beschichtungen, Schaumstoffe, Fasern oder nach dem Harzinfusionsverfahren hergestellte Laminate, oder Formstoffe, bevorzugt Spritzgussteile, nach dem Harzinfusions- bzw. Harzinjektionsverfahren hergestellte Bauteile oder aus Fasern nach der Wickel-, Flecht- oder Pultrusionstechnik und nachfolgender Harzimprägnierung hergestellte Bauteile, sind.

16. Erzeugnisse nach mindestens einem der vorhergehenden Ansprüche, **dadurch gekennzeichnet, dass** die 4- bis 18-Kern Oligotriazinether aus Mischungen von Oligotriazinethern bestehen, bei denen
R₂ = -NH₂, -NH-CHR₃-OR₄, oder -N[CHR₃-O-R₄]₂;
R₃ = H;
R₄ = C₁-C₁₈ - Alkyl oder H; bedeuten.

17. Erzeugnisse nach mindestens einem der vorhergehenden Ansprüche, **dadurch gekennzeichnet, dass** die Mischungen aus Oligotriazinethern 70 bis 90 Masse% Oligotriazinether enthalten, in denen die Triazinsegmente durch -NH-CHR₃-NH- - Gruppen verknüpft sind.

18. Erzeugnisse nach mindestens einem der vorhergehenden Ansprüche, **dadurch gekennzeichnet, dass** die als weitere reaktive Polymere in den Mischungen aus Oligotriazinethem gegebenenfalls enthaltenen modifizierten Maleinsäureanhydrid-Copolymere partiell oder vollständig veresterte bzw. amidierte Maleinsäureanhydrid-Copolymere sind.

19. Erzeugnisse nach mindestens einem der vorhergehenden Ansprüche, **dadurch gekennzeichnet, dass** die in den Formmassen enthaltenen Füllstoffe bzw. Adsorbermaterialien Al₂O₃, Al(OH)₃, SiO₂, Bariumsulfat, Calciumcarbonat, Glaskugeln, Kieselerde, Glimmer, Quarzmehl, Schiefermehl, Mikrohohlkugeln, Russ, Talkum, Schichtsilikate, Molekularsiebe, Gesteinsmehl, Holzmehl, Cellulose, Cellulosederivate, bevorzugt als Füllstoffe Schichtsilikate vom Typ Mont-morillonit, Bentonit, Kaolinit, Muskovit, Hectorit, Fluorhectorit, Kanemit, Revdit, Gru-mantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite, sowie bevorzugt als Adsorbermaterial Schichtsilikate vom Typ Montmorillonit, Bentonit, Hectorit, Molekularsiebe des Typen A, X, Y, besonders 5A, Adsorber auf Siliciumdioxidbasis, Mikrohohlkugeln, Cellulose und/oder Cellu-losederivate sind.

20. Erzeugnisse nach mindestens einem der vorhergehenden Ansprüche, **dadurch gekennzeichnet, dass** die in den Formmassen enthaltenen Verstärkungsfasern anorganische Fasern, insbesondere Glasfasern und/oder Kohlenstofffasern, Naturfasern, insbesondere Cellulosefasern sowie Flachs, Jute, Kenaf und Hotzfasern, und/oder Kunststofffasern, insbesondere Fasern aus Polyacrylnitril, Polyvinylalkohol, Polyvinylacetat, Polypropylen, Polyestern und/oder Polyamiden, sind.

21. Verfahren zur Herstellung von Erzeugnissen, insbesondere Formmassen aus Triazinsegmente enthaltenden Polymeren,
**dadurch gekennzeichnet,**
**dass** Erzeugnisse, insbesondere Formmassen, die aus Mischungen aus schmelzbaren, in stark polaren Lösungsmitteln vom Typ C₁-C₁₀-Alkohole, Dimethylformamid oder Dimethylsulfoxid löslichen, 4- bis 18-Kern-Oligotriazinethern auf Basis von Aminotriazinethern der Struktur 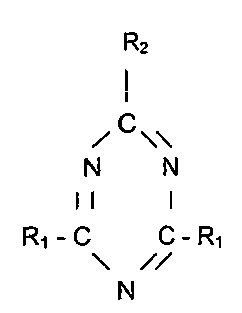 R₁ = R₄-O-CHR₃-NH- ; [R₄-O-CHR₃]₂N-
R₂ = -NH₂, -NH-CHR₃-OR₄, -N[CHR₃-O-R₄]₂, -CH₃, -C₃H₇, -C₆H₅,
R₃ = H oder C₁-C₇ - Alkyl;
R₄ = C₁-C₁₈- Alkyl; H, bestehen, wobei die Triazinsegmente in den Oligotriazinethern 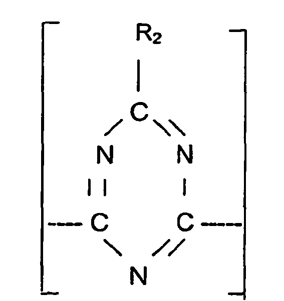 R₂ = -NH₂, -NH-CHR₃-OR₄, -N[CHR₃-O-R₄]₂, -CH₃, -C₃H₇, -C₆H₅,
R₃ = H oder C₁-C₇-Alkyl;
R₄=C₁-C₁₈-Alkyl; H, durch Brückenglieder zu 4- bis 18-Kern-Oligotriazinethern mit linearer und/oder verzweigter Struktur verknüpft sind,
die Brückenglieder bei linearer Verknüpfung der Triazinringe den Typ I bis III bilden
-NH - X - NH- (I), 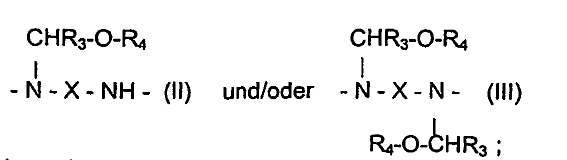
wobei X = CHR₃ und gegebenenfalls CHR₃- O - CHR₃ ist,
und die Brückenglieder bei verzweigter Struktur (*z* > *v* + 2; *z* = Zahl der verknüpften Triazinringe; *v* = Zahl der Verzweigungspunkte) sowohl Brückenglieder von Typ I bis III in den linearen Kettensegmenten als auch Brückenglieder vom Typ IV bis VII in den durchgängig verzweigten Kettensegmenten (*z* = *v* + 2) sind 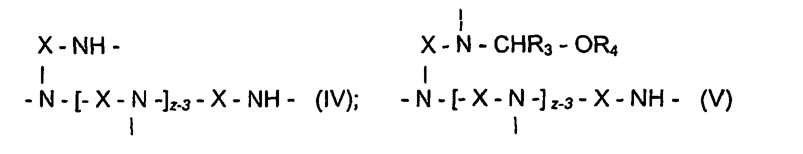 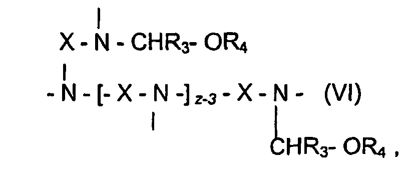 wobei X = CHR₃ und gegebenenfalls CHR₃- O - CHR₃ ist, 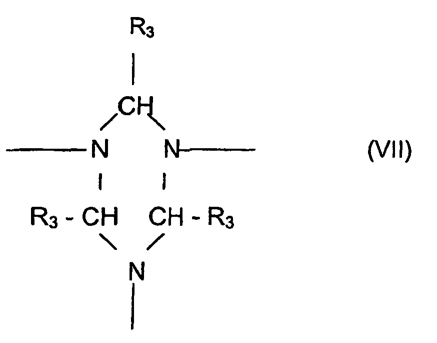 R₃ = H oder C₁-C₇ - Alkyl;
R₄ = C₁-C₁₈ - Alkyl; H,
wobei der Substituent R₄ in den Aminotriazinethem bzw. Oligotriazinethern ausschließlich C₁-C₁₈ - Alkyl oder überwiegend C₁-C₁₈ - Alkyl ist,
wobei in den Oligotriazinethern das Molverhältnis Ethergruppen/Triazinsegmente 1 : 2 bis 4,5 : 1 beträgt,
wobei Oligotriazinether, bei denen in den Brückenglieder X = CHR₃ - O - CHR₃ ist, bis zu 35 Masse% in den Formmassen aus Triazinsegmente enthaltenden Polymeren enthalten sein können,
und wobei die Erzeugnisse, insbesondre die Formmassen aus Triazinsegmente enthaltenden Polymeren gegebenenfalls bis zu 75 Masse% Füllstoffe und/oder Verstärkungsfasern, bis zu 50 Masse% weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Masse% Stabilisatoren, UV-Absorber und/oder Hilfsstoffe, enthalten können, nach einem Mehrstufenverfahren hergestellt werden, bei dem
- in der ersten Verfahrensstufe Vorkondensate aus C₁-C₈-Aldehyden und Triazinderivaten der Struktur 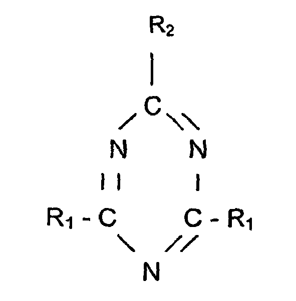 R₁= -NH₂
R₂ = -NH₂, -CH₃, -C₃H₇, -C₆H₅, -OH, Phthalimido-. Succinimido-,
mit einem Molverhältnis TriazinderivatlAldehyd 1:1 bis 1: 4 durch Umsetzung mit C₁-C₄-Alkoholen in Gegenwart ionischer Katalysatoren bei 5 bis 100°C verethert und die erhaltenen C₁-C₄-alkyl-oxa-C₁-C₈-alkylen-amino- substituierten Triazinderivate gegebenenfalls durch Umetherung mit C₄-C₁₈-Alkoholen unter Abdestillation von C₁-C₄-Alkoholen bei 80 bis 120°C in C₄-C₁₈-alkyl-oxa-C₁-C₈-alkylen-amino-substituierte Triazinderivate überführt werden, wobei durch das eingesetzte Verhältnis Hydroxy-C₁-C₈-alkylen-amino - Gruppen / Alkohol eine vollständige oder überwiegende Veretherung der Hydroxygruppen der Hydroxy-C₁-C₈-alkylen-amino-triazine erzielt wird,
- in der zweiten Verfahrensstufe zur Aufarbeitung des veretherten Vorkondensats nichtumgesetzter Alkohol und Wasser aus dem neutralisierten Reaktionsansatz abgetrennt wird, und gegebenenfalls die Schmelze der Aminotriazinether bei 70 bis 120°C in 70 bis 150 Masse%, bezogen auf die Aminotriazinether, C₃- bis C₆-Alkoholen aufgelöst wird und nach Abkühlung auf 15 bis 40°C unlösliche Anteile abgetrennt und die zugesetzten C₃- bis C₆-Alkohole bei 70 bis 140°C bis zu einem Restgehalt von 5 bis 20 Masse% verdampft werden, wobei in der zweiten Verfahrensstufe ein pH-Wert von 7 bis 10 eingehalten wird,
- in der dritten Verfahrensstufe zur Kondensation der Aminotriazinether zu Oligotriazinethem die erhaltene Schmelze, die C₁-C₁₈-alkyl-oxa-C₁-C₈-alkylen-amino - substituierte Triazine sowie geringe Anteile an Oligotriazinethern und an nichtumgesetztem bzw. nicht abgetrenntem Alkohol enthält, gegebenenfalls nach einer Temperierung von 20 bis 120 min bei 70 bis 140°C, in einen kontinuierlichen Kneter dosiert, bei einer Verweilzeit von 2 bis 12 min bei 140 bis 220°C unter Entgasung umgesetzt, und die Oligotriazinether, gegebenenfalls unter Dosierung von bis zu 75 Masse% Füllstoffen und/oder Verstärkungsfasern, weiteren reaktiven Polymeren vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Masse%, jeweils bezogen auf die Oligotriazinether, Stabilisatoren, UV-Absorbern und/oder Hilfsstoffen in die Schmelze, gegebenenfalls nach Schmelzefiltration, ausgetragen und granuliert werden,
und wobei die in der ersten Verfahrensstufe eingesetzten Vorkondensate aus Triazinderivaten und C₁-C₈-Aldehyden gegebenenfalls in einer der ersten Verfahrensstufe vorgelagerten Reaktionsstufe durch Hydroxyalkylierung von Triazinderivaten mit C₁-C₈-Aldehyden in C₁-C₄-Alkoholen oder Mischungen aus 70 bis 99 Masse% C₁-C₄-Alkoholen und 30 bis 1 Masse% Wasser, gegebenenfalls in Gegenwart ionischer Katalysatoren, bei 45 bis 90°C und Verweilzeiten von 15 bis 140 min hergestellt werden, und die Lösungen der Vorkondensate aus Triazinderivaten und C₁-C₈-Aldehyden, gegebenenfalls nach Neutralisation, direkt bei der Veretherung in der ersten Verfahrensstufe eingesetzt werden.

22. Verfahren nach Anspruch 21, **dadurch gekennzeichnet, dass** die Veretherung von Vorkondensaten aus C₁-C₈-Aldehyden und Triazinderivaten in der ersten Verfahrensstufe in Gegenwart saurer Katalysatoren bei pH = 3 bis 4 erfolgt.

23. Verfahren nach Anspruch 21 oder 22, **dadurch gekennzeichnet, dass** als ionische Katalysatoren und/oder zur Neutralisation des Reaktionsansatzes anorganische oder organische Säuren, Basen, Ionenaustauschharze und/oder saure Zeolithe eingesetzt werden.

24. Verfahren nach mindestens einem der Ansprüche 21 bis 23, **dadurch gekennzeichnet, dass** bei der Hydroxyalkylierung in der der ersten Verfahrensstufe vorgelagerten Reaktionsstufe eine methanolische Formaldehydlösung mit einem Feststoffgehalt von 40 bis 50 Masse% eingesetzt wird, die durch Auflösung von Paraformaldehyd in Methanol-Wasser-Mischungen hergestellt wird.

25. Verfahren nach mindestens einem der Ansprüche 21 bis 24, **dadurch gekennzeichnet, dass** die Hydroxyalkylierung von Triazinderivaten mit C₁-C₈-Aldehyden in der der ersten Verfahrensstufe vorgelagerten Reaktionsstufe in Gegenwart alkalischer Katalysatoren bei pH = 8 bis 9 erfolgt.

26. Verfahren nach mindestens einem der Ansprüche 21 bis 25, **dadurch gekennzeichnet dass** in der ersten Verfahrensstufe die Veretherung der Vorkondensate mit C₁-C₄-Alkoholen in Gegenwart von 10 bis 300 Masse%, bezogen auf die Trockensubstanz der eingesetzten Vorkondensate, Molekularsieben durchgeführt wird.

27. Verfahren nach mindestens einem der Ansprüche 21 bis 26, **dadurch gekennzeichnet, dass** in der ersten Verfahrensstufe die Veretherung der Vorkondensate mit C₁-C₄-Alkoholen in zwei Reaktionsschritten durchgeführt wird, wenn die Herstellung der Vorkondensate aus Triazinderivaten und C₁-C₈-Aldehyden in der der ersten Verfahrensstufe vorgelagerten Reaktionsstufe erfolgt.

28. Verfahren nach mindestens einem der Ansprüche 21 bis 26, **dadurch gekennzeichnet, dass** die der ersten Verfahrensstufe vorgelagerte Reaktionsstufe und die erste Verfahrensstufe in einem Verfahrensschritt gleichzeitig durchgeführt werden, wobei als Katalysatoren Mischungen aus alkalischen und sauren Ionenaustauschharzen mit einem Verhältnis der lonenaustauschkapazitäten von 1 : 1,15 bis 1 : 1,7 eingesetzt werden.

29. Verfahren zur Herstellung von Erzeugnissen, **dadurch gekennzeichnet, dass** Formmassen aus Mischungen von schmelzbaren 4- bis 18-Kern-Oligotriazinethern auf Basis von Triazinethern der Struktur 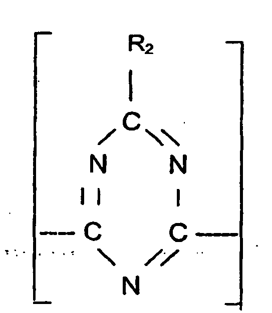 R₂ = -NH₂, -NH-CHR₃-OR₄, -N[CHR₃-O-R₄]_{2,} -CH₃, -C₃H₇, -C₆H₅,
R₃ = H oder C₁-C₇ - Alkyl;
R₄ = C₁-C₁₈ - Alkyl; H,
durch Brückenglieder zu 4- bis 18-Kern-Oligotriazinethern mit linearer und/oder verzweigter Struktur verknüpft sind,
die Brückenglieder bei linearer Verknüpfung der Triazinringe den Typ I bis III bilden
-NH - X - NH- (I), 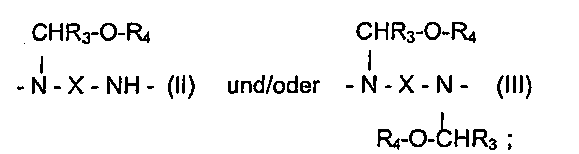
wobei X = CHR₃ und gegebenenfalls CHR₃- O - CHR₃ ist,
und die Brückenglieder bei verzweigter Struktur (*z* > *v* + 2; *z* = Zahl der verknüpften Triazinringe; *v* = Zahl der Verzweigungspunkte) sowohl Brückenglieder von Typ I bis III in den linearen Kettensegmenten als auch Brückenglieder vom Typ IV bis VII in den durchgängig verzweigten Kettensegmenten (*z* = *v* + 2) sind 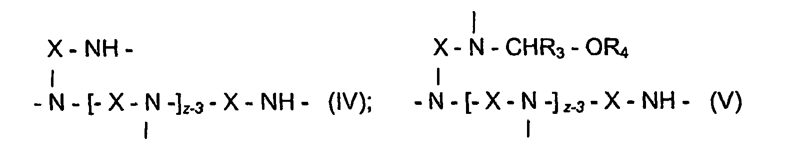 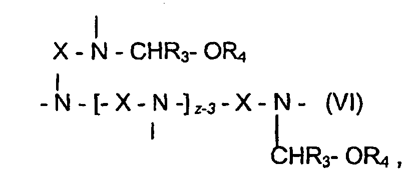 wobei X = CHR₃ und gegebenenfalls CHR₃- O - CHR₃ ist, 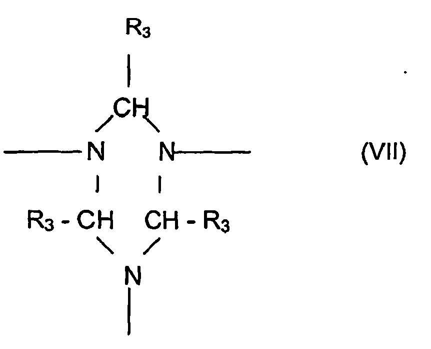 R₃ = H oder C₁-C₇ - Alkyl;
R₄ = C₁-C₁₈- Alkyl; H,
wobei der Substituent R₄ in den Aminotriazinethem bzw. Oligotriazinethern ausschliesslich C₁-C₁₈ - Alkyl oder überwiegend C₁-C₁₈- Alkyl ist,
wobei in den Oligotriazinethem das Molverhältnis Ethergruppen/Triazinsegmente 1 : 2 bis 4,5 : 1 beträgt,
wobei Oligotriazinether, bei denen in den Brückenglieder X = CHR₃ - O - CHR₃ ist, bis zu 35 Masse% in den Formmassen aus Triazinsegmente enthaltenden Polymeren enthalten sein können,
und wobei die Erzeugnisse aus Triazinsegmente enthaltenden Polymeren bis zu 75 Masse% Füllstoffe bzw. Adsorbermaterialien und/oder Verstärkungsfasern, bis zu 50 Masse% weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Masse% Stabilisatoren, UV-Absorber und/oder Hilfsstoffe, enthalten können,
in kontinuierlichen Knetern bei Massetemperaturen von 105 bis 220°C und Verweilzeiten von 2 bis 12 min, gegebenenfalls unter Zusatz von bis zu 300 Masse% Füllstoffen und/oder Verstärkungsfasern, bis zu 100 Masse% weiteren reaktiven Polymeren vom Typ Ethylen-Copolymere, Maleinsäureanhydrid-Copolymere, modifizierte Maleinsäureanhydrid-Copolymere, Poly(meth)acrylate, Polyamide, Polyester, und/oder Polyurethane, sowie bis zu 2 Masse%, jeweils bezogen auf die eingesetzten Oligotriazinether, Stabilisatoren, UV-Absorber und/oder Hilfsstoffe, aufgeschmolzen werden und unter Aushärtung der Oligotriazinether nach üblichen Verarbeitungsverfahren für thermoplastische Polymere
A) als Schmelze auf einen Glättwerk aufgegeben und als Platte über Transportbänder abgezogen und geschnitten oder auf Flächenbahnen aus Metallfolien, Kunststoffolien, Papierbahnen oder Textilbahnen aufgesiegelt und als Mehrkomponentenverbunde abgezogen und konfektioniert werden, oder
B) über eine Profildüse ausgetragen und als Profil oder Plattenmaterial abgezogen, geschnitten und konfektioniert werden, oder
C) über eine Ringdüse ausgetragen, unter Einpressen von Luft als Rohr abgezogen, geschnitten und konfektioniert werden, oder
D) nach Eindosierung von Treibmitteln über eine Breitschlitzdüse ausgetragen und als geschäumtes Plattenmaterial abgezogen werden, oder
E) über die Breitschlitzdüse einer Rohrbeschichtungsanlage ausgetragen und schmelzflüssig auf das rotierende Rohr aufgesiegelt werden, oder
F) in Spritzgussmaschinen, bevorzugt mit Dreizonenschnecken einer Schneckenlänge von 18 bis 24 D, hohen Einspritzgeschwindigkeiten und bei Werkzeugtemperaturen von 5 bis 70°C, zu Spritzgussformteilen verarbeitet werden, oder
G) in Schmelzespinnanlagen mittels Schmelzepumpe durch das Kapillarwerkzeug in den Blasschacht extrudiert und als Fäden abgezogen oder nach dem Melt-Blow-Verfahren als Fasern abgetrennt, oder als Schmelze nach dem Rotationsspinnverfahren in eine Scherfeldkammer mit organischen Dispergiermitteln unter Bildung von Faserfibriden ausgetragen, und in Nachfolgeeinrichtungen weiterverarbeitet werden, oder
H) nach dem Harzinfusionsverfahren in eine offene Form mit dem Faserhalbzeug dosiert und nach der Vakuumsacktechnologie zu Laminaten ausgeformt werden, oder
I) nach dem Harzinjektionsverfahren in eine verriegelbare Form, in dem sich Preforms aus textilem Material befinden, injiziert werden und zu Bauteilen ausgeformt und ausgehärtet werden, oder
K) zur Schmelzeimprägnierung von nach dem Wickelverfahren, Flechtverfahren oder Pultrusionsverfahren hergestellter Bauteilrohlinge eingesetzt werden,
und die Erzeugnisse gegebenenfalls zur vollständigen Aushärtung einer thermischen Nachbehandlung bei Temperaturen von 180 bis 220°C und Verweilzeiten von 30 bis 120 min unterzogen werden.

30. Verfahren zur Herstellung von Erzeugnissen nach Anspruch 29, **dadurch gekennzeichnet, dass** die Herstellung von Faserfibriden aus Oligotriazinethern durch
- Eintrag der Schmelze über Eintragsdüsen bei Schmelzetemperaturen von 105 bis 130°C in eine Scherfeldkammer, die auf 95 bis 135°C erhitzte hochsiedende organische Dispergiermittel, bevorzugt Paraffinöl oder Motorenöl, enthält, wobei in die Scherfeldkammer saure Gase, bevorzugt Chlorwasserstoff oder Schwefeldioxid, eingeleitet werden, und wobei der aus der Eintragsdüse austretende Schmelzestrang durch das vom Rotor verwirbelte Öl unter Faserbildung verstreckt und zerteilt wird,
- Überführung der Dispersion der gebildeten Faserfibride in organischen Dispergiermitteln in einen Siebabscheider unter gleichzeitiger Extraktion der hochsiedenden Dispergiermittel mit niedrigsiedenden Kohlenwasserstoffen, bevorzugt Hexan oder Heptan,
- Austrag des Faserfibrid-Kurzfaservlieses und gegebenenfalls thermische Nachvernetzung des Kurzfaservlieses bei Temperaturen von 180 bis 210°C und Verweilzeiten von 40 bis 120 min, erfolgt.

31. Verwendung von Erzeugnissen, insbesondere Formmassen nach mindestens einem der Ansprüche 1 bis 20 für Anwendungen mit hohen Anforderungen an Flammfestigkeit und Wärmebeständigkeit im Bauwesen, Maschinenbau und Fahrzeugindustrie, insbesondere in Form von Schaumplatten als Isolationsbauteile, in Form von Platten als Verkleidungselemente, in Form von Rohren und Hohlprofilen in der Lüftungstechnik, in Form von Spritzgussteilen als Funktionsteile sowie in Form von Fasern insbesondere zur Herstellung von Elektroisolationspapieren, Feuerschutzkleidung, Kleidung für hohe Arbeitstemperaturen, Brandschutzdecken, Filtervliesen, Filzen für Papiermaschinen sowie Fahrzeug- bzw. Maschinen-Isolationsabdeckungen, in Form von faserverstärkten Kunststoffbauteilen nach dem Harzinfusionsverfahren, in Form von Sandwichbauteilen nach dem Harzinjektionsverfahren sowie in Form komplexer Bauteile, Behälter oder Profile nach dem Wickel-, Flecht- oder Pultrusionsverfahren.

32. Verwendung von Formmassen nach mindestens einem der Ansprüche 1 bis 20 zur Schmelzeverarbeitung, insbesondere als Schmelzkleber und zur Herstellung von Platten, Rohren, Profilen, Spritzgussteilen, Fasern, Beschichtungen und Schaumstoffen, sowie zur Verarbeitung aus Lösung oder Dispersion als Adhesiv, Imprägnierharz, Lackharz oder Laminierharz oder zur Herstellung von Schäumen, Mikrokapseln oder Fasern.

## Claims

1. Products, in particular molding materials of polymers containing triazine segments, **characterized in that** the polymers containing triazine segments are mixtures of meltbare 4- to 18-ring oligotriazine ethers based on triazine ethers, in particular aminotriazine ethers of the structure 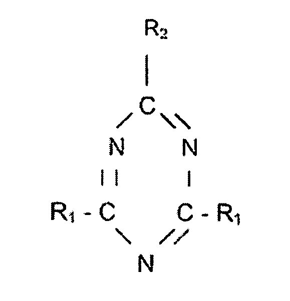 R₁ = R₄-O-CHR₃-NH- ; [R₄-O-CHR₃]₂N-
R₂ = -NH₂, -NH-CHR₃-OR₄, -N[CHR₃-O-R₄]₂, -CH₃, -C₃H₇, -C₆H₅, -OH, phthalimido-. succinimido-,
R₃ = H or C₁-C₇-Alkyl;
R₄ = C₁-C₁₈-Alkyl; H.

2. Products according to claim 1, **characterized in that** the triazine segments in the oligotriazine ethers 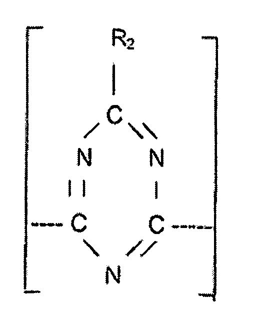 R₂ = -NH₂, -NH-CHR₃-OR₄, -N[CHR₃-O-R₄]₂, -CH₃, -C₃H₇, -C₆H₅, -OH, phthalimido-, succinimido-,
R₃ = H or C₁-C₇-Alkyl;
R₄ = C₁-C₁₈-Alkyl; H, are linked by bridging bonds to 4- to 18-ring oligotriazine ethers with linear and/or branched structure.

3. Products according to claim 2, **characterized in that** the bridging bonds form type I to III with linear linking of the triazine rings 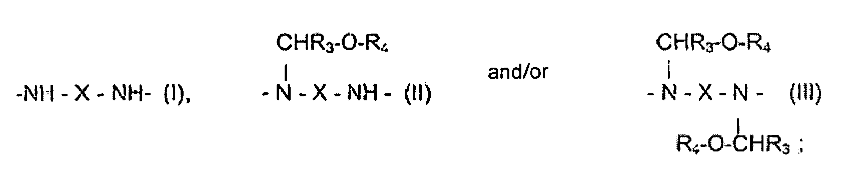 where X = CHR₃ and is optionally CHR₃-O-CHR₃.

4. Products according to claim 2 or 3, **characterized in that** the bridging bonds with branched structure (z > v + 2; z = number of bonded triazine rings; v = number of branching points) are both bridging bonds of type I to III in the linear chain segments and bridging bonds of the type IV to VII in the continuously branched chain segments (z = v + 2) 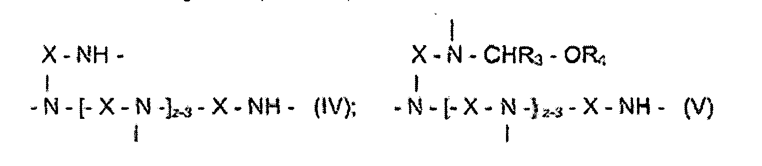 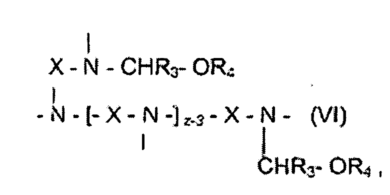 where X = CHR₃ and is optionally CHR₃-O-CHR₃, 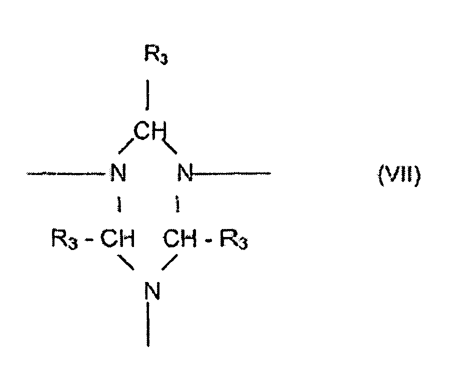 R₃ = H or C₁-C₇-Alkyl;
R₄ = C₁-C₁₈-Alkyl; H,

5. Products according to at least one of the preceding claims, **characterized in that** the substituent R₄ in the triazine ethers, in particular aminotriazine ethers or oligotriazine ethers is exclusively C₁-C₁₈-Alkyl or predominantly C₁-C₁₈-Alkyl.

6. Products according to at least one of the preceding claims, **characterized in that** in the oligotriazine ethers the molar ratio of ether groups/triazine segments is 1 : 2 to 4.5 : 1.

7. Products according to at least one of the preceding claims, **characterized in that** oligotriazine ethers, in which in the bridging bonds X = CHR₃-O- CHR₃, are contained up to 35 wt % in the molding materials of polymers containing triazine segments.

8. Products according to at least one of the preceding claims, **characterized in that** the products, in particular molding materials of polymers containing triazine segments contain up to 75 wt % fillers, adsorbing materials and/or reinforcing fibers, up to 50 wt % other reactive polymers of the type ethylene copolymers, maleic acid anhydride copolymers, modified maleic acid anhydride copolymers, poly(meth)acrylates, polyamides, polyesters and/or polyurethanes, as well as up to 2 wt % stabilizers, UV absorbers and/or auxiliary agents.

9. Products according to at least one of the preceding claims, **characterized in that** the oligotriazine ethers are soluble in polaren solvents of the type C₁-C₁₀ alcohols, dimethyl formamide or dimethyl sulfoxide.

10. Products according to at least one of the preceding claims, **characterized in that** they are produced by thermoplastic processing of molding materials from mixtures of meltable 4- to 18-ring oligotriazine ethers based on the structure according to claim 1.

11. Products according to at least one of the preceding claims, **characterized in that** the oligotriazine ethers are 4 to 8 ring oligotriazine ethers.

12. Products according to at least one of the preceding claims, **characterized in that** the oligotriazine ethers in the mixtures are oligotriazine ethers with R₃= H.

13. Products according to at least one of the preceding claims, **characterized in that** the mixtures of oligotriazine ethers contain 70 to 90 wt % oligotriazine ethers in linear linking.

14. Products according to at least one of the preceding claims, **characterized in that** the modified maleic acid anhydride copolymers that are optionally contained as other reactive polymers in the products, in particular molding materials, are partially or completely esterified, amidated, or imidated maleic acid anhydride copolymers.

15. Products according to at least one of the preceding claims, **characterized in that** the products are semifinished products, preferably sheets, tubes, profiles, coatings, foamed materials, fibers or laminates made with the resin infusion method, or molding materials, preferably injection molded parts, components producted with the resin infusion or resin injection method, or components produced from fibers with filament winding, braiding or pultrusion technology and subsequent resin impregnation.

16. Products according to at least one of the preceding claims, **characterized in that** the 4- to 18-ring oligotriazine ethers consist of mixtures of oligotriazine ethers, where
R₂ = -NH₂, -NH-CHR₃-OR₄, or -N [CHR₃-O-R₄]₂;
R₃ = H;
R₄ = C₁-C₁₈ - Alkyl or H.

17. Products according to at least one of the preceding claims, **characterized in that** the mixtures of oligotriazine ethers contain 70 to 90 wt % oligotriazine ethers, in which the triazine segments are linked by -NH-CHR₃-NH- groups.

18. Products according to at least one of the preceding claims, **characterized in that** the modified maleic acid anhydride copolymers that are optionally contained as other reactive polymers in the mixtures of oligotriazine ethers are partially or completely esterified or amidated maleic acid anhydride copolymers.

19. Products according to at least one of the preceding claims, **characterized in that** the fillers or adsorbing materials contained in the molding materials are Al₂O₃, Al(OH)₃, SiO₂, barium sulfate, calcium carbonate, glass beads, silica, mica, silica flour, powdered slate, microballoons, carbon black, talc, phyllosilicates, molecular sieves, powdered stone, wood flour, cellulose, cellulose derivatives, preferably as fillers phyllosilicates of the type montmorillonite, bentonite, kaolinite, muscovite, hectorite, fluorohectorite, kanemite, revdite, grumantite, ilerite, saponite, beidelite, nontronite, stevensite, laponite, taneolite, vermiculite, halloysite, volkonskoite, magadite, rectorite, kenyaite, sauconite, borofluoroflogopite and/or synthetic smectites, as well as preferably as adsorbing materials phyllosilicates of the type montmorillonite, bentonite, hectorite, molecular sieves of the types A, X, Y, in particular 5A, silicon dioxide-based adsorbers, microballoons, cellulose and/or celluose derivates.

20. Products according to at least one of the preceding claims, **characterized in that** the reinforcing fibers contained in the molding materials are inorganic fibers, in particular glass fibers and/or carbon fibers, natural fibers, in particular cellulose fibers as well as flax, jute, kenaf, and wood fibers, and/or synthetic fibers, in particular fibers made of polyacrylonitrile, polyvinyl alcohol, polyvinyl acetate, polypropylene, polyesters and/or polyamides.

21. Method for production of products, in particular molding materials of polymers containing triazine segments,
**characterized in that**
products, in particular molding materials, that consist of mixtures of meltable, soluble in highly polar solvents of the type C₁-C₁₀-alcohols, dimethyl formamide or dimethyl sulfoxide, 4- to 18-ring oligotriazine ethers based on aminotriazine ethers of the structure 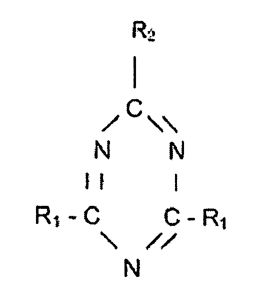 R₁ = R₄-O-CHR₃-NH-; [R₄-O-CHR₃]₂N-
R₂ = -NH₂, -NH-CHR₃-OR₄, -N[CHR₃-O-R₄]₂, -CH₃, -C₃H₇, -C₆H₅,
R₃ = H or C₁-C₇ - Alkyl;
R₄ = C₁-C₁₈-Alkyl; H,
where the triazine segments in the oligotriazine ethers 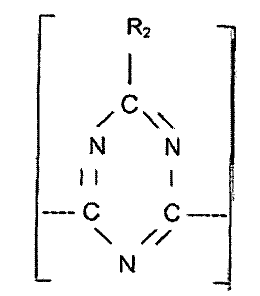 R₂ = -NH₂, -NH-CHR₃-OR₄, -N[CHR₃-O-R₄]₂, -CH₃, -C₃H₇, -C₆H₅,
R₃ = H or C₁-C₇ - Alkyl;
R₄ = C₁-C₁₈ - Alkyl; H,
are linked by bridging bonds to 4- to 18-ring oligotriazine ethers with linear and/or branched structure, the bridging bonds form type I to III with linear linking of the triazine rings 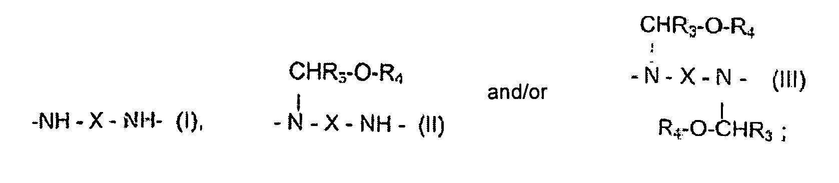 where X = CHR₃ and optionally CHR₃-O-CHR₃,
and the bridging bonds with branched structure (z > v + 2; z = number of bonded triazine rings ; v = number of branching points) are both bridging bonds of type I to III in the linear chain segments and bridging bonds of the type IV to VII in the continuously branched chain segments (z = v + 2) 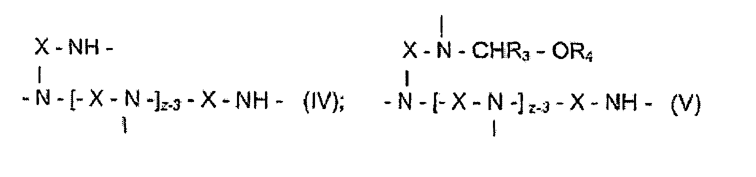 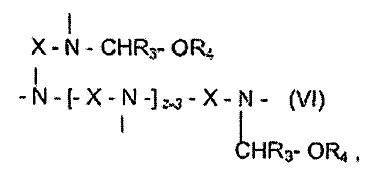 where X = CHR₃ and optionally CHR₃-O-CHR₃, 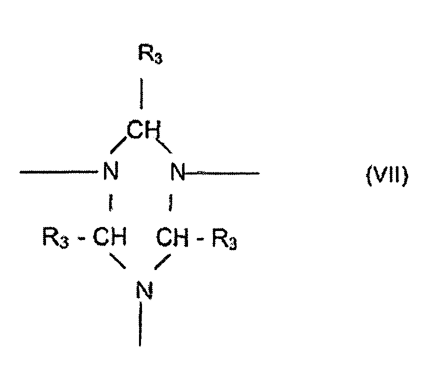 R₃ = H or C₁-C₇-Alkyl;
R₄ = C₁-C₁₈-Alkyl; H,
where the substituent R₄ in the aminotriazine ethers or oligotriazine ethers is exclusively C₁-C₁₈-Alkyl or predominantly C₁-C₁₈-Alkyl,
where in the oligotriazine ethers the molar ratio of ether groups/triazine segments is 1 : 2 to 4.5 : 1,
where oligotriazine ethers, in which in the bridging bonds X = CHR₃-O-CHR₃, may be contained up to 35 wt % in the molding materials of polymers containing triazine segments,
and where products, in particular the molding materials of polymers containing triazine segments can contain optionally up to 75 wt % fillers and/or reinforcing fibers, up to 50 wt % other reactive polymers of the type ethylene copolymers, maleic acid anhydride copolymers, modified maleic acid anhydride copolymers, poly(meth)acrylates, polyamides, polyesters and/or polyurethanes, as well as up to 2 wt % stabilizers, UV absorbers and/or auxiliary agents, are produced using a multistage method, in which
- in the first process stage precondensates of C₁-C₈ aldehydes and triazine derivatives of the structure 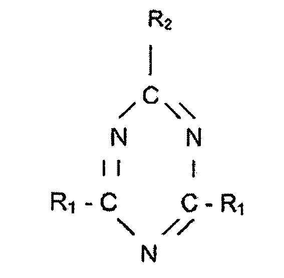 R₁ = -NH₂
R₂ = -NH₂, -CH₃, -C₃H₇, -C₆H₅, -OH, phthalimido-, succinimido-,
with a molar ratio of triazine derivative/aldehyde 1 : 1 to 1 : 4 are etherified by reaction with C₁-C₄-alcohols in the presence of ionic catalysts at 5 to 100°C and the C₁-C₄-alkyl-oxa-C₁-C₈-alkylene-amino-substituted triazine derivatives obtained are optionally transformed by transetherification with C₄-C₁₈-alcohols with distillation off of C₁-C₄-alcohols at 80 to 120°C in C₄-C₁₈-alkyl-oxa-C₁-C₈-alkylene-amino-substituted triazine derivatives, where depending the ratio of hydroxy-C₁-C₈-alkylene-amino-groups/alcohol used complete or preponderant etherification of the hydroxy groups of the hydroxy-C₁-C₈-alkylene-amino-triazine is obtained,
- in the second process stage for reprocessing of the etherified precondensate, unreacted alcohol and water are separated out of the neutralized reaction batch, and optionally the melt of the aminotriazine ethers is dissolved at 70 to 120°C in 70 to 150 wt %, based on the aminotriazine ethers, C₃- to C₆-alcohols and after cooling to 15 to 40°C insoluble portions are separated out and the C₃- to C₆-alcohols added are evaporated at 70 to 140°C to a residual content of 5 to 20 wt %, whereby in the second process stage a pH of 7 to 10 is maintained,
- in the third process stage for condensation of the aminotriazine ethers into oligotriazine ethers the melt obtained, which contains C₁-C₁₈-alkyl-oxa-C₁-C₈-alkylene-amino - substituted triazine as well as small portions of oligotriazine ethers and of unreacted or unseparated alcohol, optionally after temperature control of 20 to 120 min at 70 to 140°C, is measured into a continuous kneader, reacted with a residence time of 2 to 12 min at 140 to 220°C with degassing, and the oligotriazine ethers, optionally with dosing of up to 75 wt % fillers and/or reinforcing fibers, other reactive polymers of the type ethylene copolymers, maleic acid anhydride copolymers, modified maleic acid-anhydrid-copolymere, poly(meth)acrylates, polyamides, polyesters and/or polyurethane, as well as up to 2 wt %, based in each case on the oligotriazine ethers, stabilizers, UV absorbers and/or auxiliary agents into the melt, optionally after melt filtration, are discharged and granulated,
and where precondensates of triazine derivatives and C₁-C₈-aldehydes used in the first process stage are optionally produced in a reaction stage upstream from the first process stage by hydroxyalkylation of triazine derivatives with C₁-C₈-aldehydes in C₁-C₄-alcohols or mixtures of 70 to 99 wt % C₁-C₄-alcohols and 30 to 1 wt % of water, optionally in the presence of ionic catalysts, at 45 to 90°C and residence times of 15 to 140 min, and the solutions of the precondensates from triazine derivatives and C₁-C₈-aldehydes, optionally after neutralization, are used directly in the etherification in the first process stage.

22. Method according to claim 21, **characterized in that** the etherification of precondensates from C₁-C₈-aldehydes and triazine derivatives takes place in the first process stage in the presence of acidic catalysts at pH = 3 to 4.

23. Method according to claim 21 or 22, **characterized in that** inorganic or organic acids, bases, ion exchange resins and/or acidic zeolites are used as ionic catalysts and/or for the neutralization of the reaction batch.

24. Method according to at least one of claims 21 through 23, **characterized in that** in the hydroxyalkylation in the reaction stage upstream from the first process stage, a methanolic formaldehyde solution with a solid content of 40 to 50 wt % that is produced by dissolving paraformaldehyde in methanol water mixtures is used.

25. Method according to at least one of claims 21 through 24, **characterized in that** the hydroxyalkylation of triazine derivatives with C₁-C₈-aldehydes takes place in the reaction stage upstream from the first process stage in the presence of alkaline catalysts at pH = 8 to 9.

26. Method according to at least one of claims 21 through 25, **characterized in that** in the first process stage the etherification of the precondensates with C₁-C₄-alcohols is carried out in the presence of 10 to 300 wt %, based on the dry substance of the precondensate used, molecular sieves.

27. Method according to at least one of claims 21 through 26, **characterized in that** in the first process stage the etherification of the precondensates is carried out with C₁-C₄-alcohols in two reaction steps, when the production of the precondensates from triazine derivatives and C₁-C₈-aldehydes takes place in the reaction stage upstream from the first process stage.

28. Method according to at least one of claims 21 through 26, **characterized in that** the reaction stage upstream from the first process stage and the first process stage are performed simultaneously in one process step, wherein mixtures of alkaline and acid ion exchange resins with a ratio of the ion exchange capacities of 1 : 1.15 to 1 : 1.7 are used as catalysts.

29. Method for production of products, **characterized in that** molding materials of mixtures of meltable 4- to 18-ring oligotriazine ethers based on triazine ethers of the structure 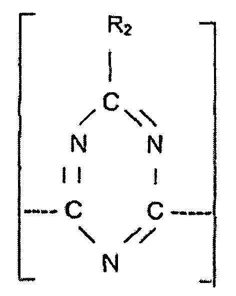 R₂ = -NH₂, -NH-CHR₃-OR₄, -N [CHR₃-O-R₄]₂, -CH₃, -C₃H₇, -C₆H₅,
R₃ = H or C₁-C₇-Alkyl;
R₄ = C₁-C₁₈-Alkyl; H,
are linked by bridging bonds to 4- to 18-ring oligotriazine ethers with linear and/or branched structure,
the bridging bonds form type I to III with linear linking of the triazine rings 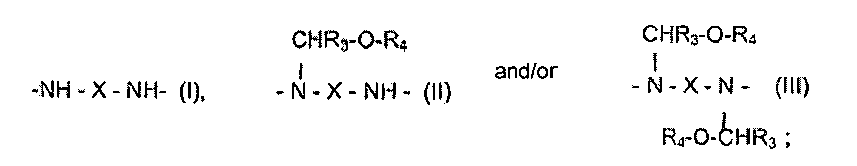 where X = CHR₃ and optionally CHR₃-O-CHR₃,
and the bridging bonds with branched structure (z > v + 2; z = number of bonded triazine rings; v = number of branching points) are both bridging bonds of type I to III in the linear chain segments and bridging bonds of the type IV to VII in the highly branched chain segments (z = v + 2) 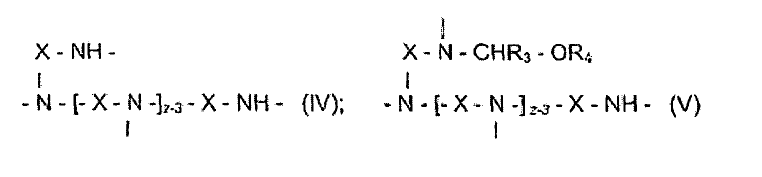 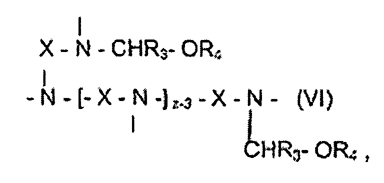 where X = CHR₃ and optionally CHR₃ - O - CHR₃, 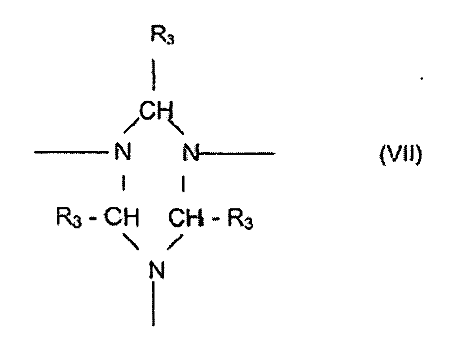 R₃ = H or C₁-C₇-Alkyl;
R₄ = C₁-C₁₈-Alkyl; H,
where the substituent R₄ in the aminotriazine ethers or oligotriazine ethers is exclusively C₁-C₁₈-Alkyl or predominantly C₁-C₁₈-Alkyl,
in which in the oligotriazine ethers the molar ratio of ether groups/triazine segments amounts to 1 : 2 to 4.5: 1,
where oligotriazine ethers, in which in the bridging bonds X = CHR₃-O-CHR₃, may be contained up to 35 wt% in the molding materials of polymers containing triazine segments,
and where the products of polymers containing triazine segments can contain up to 75 wt% fillers or adsorbing materials and/or reinforcing fibers, up to 50 wt% other reactive polymers of the type ethylene copolymers, maleic acid anhydride copolymers, modified maleic acid anhydride copolymers, poly(meth)acrylates, polyamides, polyesters and/or polyurethanes, as well as up to 2 wt % stabilizers, UV absorbers and/or auxiliary agents,
in continuous kneaders at material temperatures of 105 to 220°C and residence times of 2 to 12 min, optionally with addition of up to 300 wt % fillers and/or reinforcing fibers, up to 100 wt % of other reactive polymers of the type ethylene copolymers, maleic acid anhydride copolymers, modified maleic acid anhydride copolymers, poly(meth)acrylates, polyamides, polyesters, and/or polyurethanes, as well as up to 2 wt %, based in each case on the oligotriazine ethers used, stabilizers, UV absorbers, and/or auxiliary agents are melted and with curing of the oligotriazine ethers using conventional processing methods for thermoplastic polymers
A) are discharged as a melt onto a calender and withdrawn as sheets via conveyor belts and cut or or sealed onto flat sheets of metal foils, plastic films, paper webs or textile webs and withdrawn as multicomponent composites and packaged, or
B) are discharged via a profile die and withdrawn as profile or sheets, cut and packaged, or
C) are discharged via a ring die, withdrawn with injection of air as tubing, cut and packaged, or
D) are discharged after dosing of foaming agents via a slot die and withdrawn as foamed sheets, or
E) are discharged via a slot die of a tube coating system and and sealed as molten liquid onto the rotating tube, or
F) are processed into injection molded parts in injection molding machines, preferably with three-zone screws with a screw length of 18 to 24 D, high injection speeds and at mold temperatures of 5 to 70°C, or
G) extruded into melt spinning systems by melt pumps through the capillary tool into the blowing pipe and withdrawn as threads or separated as fibers using the melt blow method, or discharged as melts using the rotation spinning method into a shear field chamber with organic dispersants forming fibrous fibrids, and further processed in downstream equipment, or
H) metered by the resin infusion method into an open mold with the semifinished fiber and made into laminates using vacuum bag technology, or
I) are injected by the resin injection method into a locking mold, in which preforms made of textile material are located and are shaped into components and hardened, or
K) for the hot melt impregnation of component blanks produced by the winding method, braiding method or pultrusion method are used, and the products are optionally subjected to complete curing of a thermal posttreatment at temperatures of 180 to 220°C and residence times of 30 to 120 min.

30. Method for production of products according to claim 29, **characterized in that** the production of fibrous fibrids from oligotriazine ethers takes place through
- feeding of the melt via feed dies at fusion temperatures of 105 to 130°C into a shear field chamber that contains high boiling organic dispersant, preferably paraffin oil or motor oil, heated to 95 to 135°C, wherein acid gases, preferably hydrochloric acid or sulfur dioxide, are introduced into the shear field chamber, and wherein the molten strand leaving the feed die is drawn through the oil swirled by the rotor and dispersed forming fibers,
- transfer of the dispersion of the fibrous fibrids formed in organic dispersants in a sieve separator with simultaneous extraction of the high-boiling dispersant with low-boiling hydrocarbons, preferably hexane or heptane,
- discharge of the fibrous fibrid-chopped strand mat and optionally secondary thermal curing of the chopped strand mat at temperatures of 180 to 210°C and residence times of 40 to 120 min.

31. Use of products, in particular molding materials according to at least one of claims 1 through 20 for applications with high requirements for flame resistance and thermal stability in the building and construction industry, mechanical engineering, and the auto industry, in particular in the form of foam sheets as insulation components, in the form of sheets as trim elements, in the form of tubes and hollow profiles in ventilation technology, in the form of injection molded parts as functional parts as well as in the form of fibers in particular for the production of electrical insulating papers, fireproof clothing, apparel for high working temperatures, fireproof roofs, filter mats, felts for paper machines as well as motor vehicle or machine insulation covers, in the form of fiber reinforced plastic components made with the resin infusion method, in the form of sandwich components made with the resin injection method as well as in the form of complex components, containers or profiles made with the filament winding, braiding, or pultrusion method.

32. Use of molding materials according to at least one of claims 1 through 20 for fusion processing, in particular as hot-melt adhesives and for the production of sheets, tubes, profiles, injection molded parts, fibers, coatings and foamed materials, as well as for processing from solution or dispersion as adhesive, impregnation resin, paint resin, or laminating resin or for the production of foams, microcapsules, or fibers.

## Revendications

1. Produits, en particulier matières moulables en polymères contenant des segments de triazine, **caractérisés en ce que** les polymères contenant des segments de triazine sont des mélanges d'éthers fusibles à la chaleur d'oligotriazines ayant de 4 à 18 noyaux à base d'éthers de triazine, en particulier d'éthers d'aminotriazine de structure 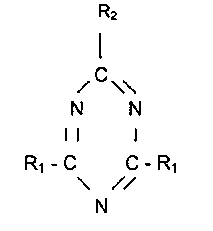 où
R₁= R₄-O-CHR₃-NH- ; [R₄-O-CHR₃]₂N-
R₂ = -NH₂, -NH-CHR₃-OR₄, -N[CHR₃-O-R₄]₂, -CH₃, -C₃H₇, -C₆H₅, -OH, phtalimido-, succinimido-,
R₃ = H ou C₁-C₇-alkyle ;
R₄ = C₁-C₁₈-alkyle ; H.

2. Produits selon la revendication 1, **caractérisés en ce que** les segments de triazine dans les éthers d'oligotriazine 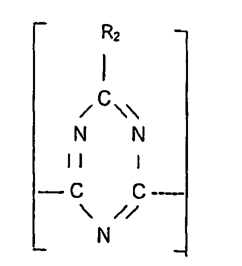 où
R₂ = -NH₂, -NH-CHR₃-OR₄, -N[CHR₃-O-R4]₂,-CH₃, -C₃H₇, -C₆H₅, -OH, phtalimido-, succinimido-
R₃ = H ou C₁-C₇-alkyle ;
R₄ = C₁-C₁₈-alkyle ; H,
sont reliés par des chaînons pontants pour former des éthers d'oligotriazine ayant de 4 à 18 noyaux avec une structure linéaire et/ou ramifiée.

3. Produits selon la revendication 2, **caractérisés en ce que** les chaînons pontants dans le cas de la connexion linéaire des anneaux de triazine forment le type I à III 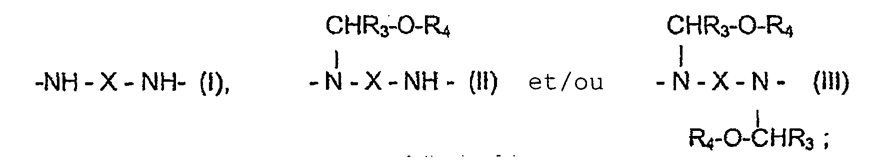 où X = CHR₃ et, le cas échéant, CHR₃-O-CHR₃.

4. Produits selon la revendication 2 ou 3, **caractérisés en ce que** les chaînons pontants dans le cas de la structure ramifiée (z > v + 2; z = nombre des anneaux de triazine connectés ; v = nombre des points de ramification) ainsi que les chaînons pontants du type I à III dans les segments de chaîne linéaires, mais aussi les chaînons pontants du type IV à VII dans les segments ramifiés à manière continue (z = v + 2) sont 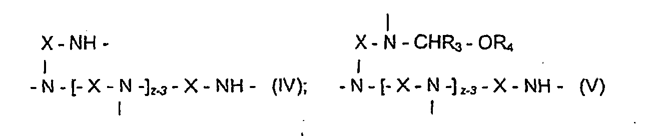 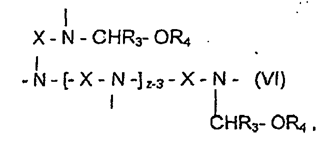 où X = CHR₃ et, le cas échéant, CHR₃-O-CHR₃ 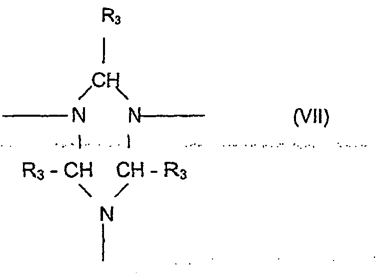 R³ = H ou C₁-C₇-alkyle ;
R⁴ = C₁-C₁₈-alkyle ; H

5. Produits selon au moins l'une quelconque des revendications précédentes, **caractérisés en ce que** le substituant R₄ dans les éthers de triazine, en particulier dans les éthers d'aminotriazine ou les éthers d'oligotriazine, est exclusivement un radical C₁-C₁₈-alkyle ou, pour la majeure partie, un radical C₁-C₁₈-alkyle.

6. Produits selon au moins l'une quelconque des revendications précédentes, **caractérisés en ce que**, dans les éthers d'oligotriazine, le rapport molaire groupements éther/segments de triazine va de 1:2 à 4,5:1.

7. Produits selon au moins l'une quelconque des revendications précédentes, **caractérisés en ce que** les éthers d'oligotriazine, pour lesquels, dans les chaînons pontants, X = CHR₃-O-CHR₃, sont contenus jusqu'à raison de 35 % en masse dans les matières moulables en polymères contenant des segments de triazine.

8. Produits selon au moins l'une quelconque des revendications précédentes, **caractérisés en ce que** les produits, en particulier les matières moulables en polymères contenant des segments de triazine, contiennent jusqu'à 75 % en masse de charges, de matériaux adsorbants et/ou de fibres de renforcement, jusqu'à 50% en masse de polymères réactifs supplémentaires du type copolymères d'éthylène, copolymères de l'anhydride maléique, copolymères de l'anhydride maléique modifiés, poly(méth)acrylates, polyamides, polyesters et/ou polyuréthanes ainsi que jusqu'à 2 % en masse d'agents de stabilisation, d'agents absorbeurs de rayons UV et/ou d'adjuvants.

9. Produits selon au moins l'une quelconque des revendications précédentes, **caractérisés en ce que** les éthers d'oligotriazine sont solubles dans des solvants polaires du type alcools en C₁-C₁₀, diméthylformamide ou diméthylsulfoxyde.

10. Produits selon au moins l'une quelconque des revendications précédentes, **caractérisés en ce qu'**ils sont fabriqués par une mise en oeuvre thermoplastique de matières moulables en mélanges d'éthers fusibles à la chaleur d'oligotriazine ayant 4 à 8 noyaux, à base de la structure selon la revendication 1.

11. Produits selon au moins l'une quelconque des revendications précédentes, **caractérisés en ce que** les éthers d'oligotriazine sont des éthers d'oligotriazine ayant de 4 à 8 noyaux.

12. Produits selon au moins l'une quelconque des revendications précédentes, **caractérisés en ce que** les éthers d'oligotriazine dans les mélanges sont des éthers d'oligotriazine avec R₃ = H.

13. Produits selon au moins l'une quelconque des revendications précédentes, **caractérisés en ce que** les mélanges d'éthers d'oligotriazine contiennent de 70 à 90 % en masse d'éthers d'oligotriazine en connexion linéaire.

14. Produits selon au moins l'une quelconque des revendications précédentes, **caractérisés en ce que** les copolymères de l'anhydride maléique modifiés contenus, le cas échéant, en tant que polymères réactifs supplémentaires dans les produits, en particulier dans des matières moulables sont des copolymère de l'anhydride maléique partiellement ou complètement estérifiés, amidés ou imidés.

15. Produits selon au moins l'une quelconque des revendications précédentes, **caractérisés en ce que** les produits sont des produits semi-finis, de préférence des plaques, des tubes, des profilés, des revêtements, des mousses, des fibres ou des stratifiés fabriqués conformément au procédé d'infusion de résine ou des substances moulables, en particulier des pièces moulées par injection, des pièces fabriquées conformément au procédé d'infusion de résine ou au procédé d'injection de résine ou de pièces fabriquées selon des techniques d'enroulement, de tressage ou de pultrusion avec imprégnation subséquente de résine.

16. Produits selon au moins l'une quelconque des revendications précédentes, **caractérisés en ce que** les éthers d'oligotriazine ayant de 4 à 18 noyaux se composent de mélanges d'éthers d'oligotriazine, pour lesquels
R₂ = -NH₂, -NH-CHR₃-OR₄, ou -N[CHR₃-O-R₄]₂ ;
R₃ = H ;
R₄ = C₁-C₁₈-alkyle ou H.

17. Produits selon au moins l'une quelconque des revendications précédentes, **caractérisés en ce que** les mélanges d'éthers d'oligotriazine contiennent de 70 à 90 % en masse d'éthers d'oligotriazine, dans lesquels les segments de triazine sont connectés par des groupements -NH-CHR₃-NH-.

18. Produits selon au moins l'une quelconque des revendications précédentes, **caractérisés en ce que** les copolymères de l'anhydride maléique modifiés contenus, le cas échéant, en tant que polymères réactifs supplémentaires dans les mélanges d'éthers d'oligotriazine sont des copolymères de l'anhydride maléique partiellement ou complètement estérifiés ou amidés.

19. Produits selon au moins l'une quelconque des revendications précédentes, **caractérisés en ce que** les charges ou les matériaux absorbants contenu(e)s dans les matières moulables sont le Al₂O₃, le Al(OH)₃, le SiO₂, le sulfate de baryum, le carbonate de calcium, des billes en verre, la silice, le mica, la farine de quartz, la farine d'ardoise, des microbilles creuses, le noir de fumée, le talc, les silicates stratifiés, les tamis moléculaires, la farine de pierre, la farine de bois, la cellulose, des dérivés de la cellulose, de préférence, en tant que charges, des silicates stratifiés du type montmorillonite, bentonite, kaolinite, muscovite, hectorite, fluorohectorite, kanemite, revdinite, grumantite, ilérite, saponite, beidelite, nontronite, stevensite, laponite, taneolite, vermiculite, hailoysite, volkonskoïte, magadite, rectorite, kenyaite, sauconite, borofluorophlogopite et/ou des smectites synthétiques ainsi que, de préférence, en tant que matériaux absorbants, des silicates stratifiés du type montmorillonite, bentonite, hectorite, des tamis moléculaires des types A, X, Y, en particulier 5A, des agents absorbants à base de dioxyde de silicium, des microbilles creuses, de la cellulose et/ou des dérivés de la cellulose.

20. Produits selon au moins l'une quelconque des revendications précédentes, **caractérisés en ce que** les fibres de renforcement contenues dans les matières moulables sont des fibres minérales, en particulier des fibres de verre et/ou des fibres de carbone, des fibres naturelles, en particulier des fibres de cellulose ainsi que du lin, de la jute, du kenaf et des fibres de bois et/ou des fibres synthétiques, en particulier des fibres en polyacrylonitrile, en alcool polyvinylique, en acétate de polyvinyle, en polypropylène, en polyesters et/ou en polyamides.

21. Procédé de fabrication de produits, en particulier de matières moulables en polymères contenant des segments de triazine, **caractérisé en ce que** l'on fabrique les produits, en particulier les matières moulables, qui se composent de mélanges d'éthers d'oligotriazine ayant de 4 à 18 noyaux, solubles dans des solvants fortement polaires du type alcools en C₁-C₁₀, diméthylformamide ou diméthylsulfoxyde, à base d'éthers d'aminotriazine de structure 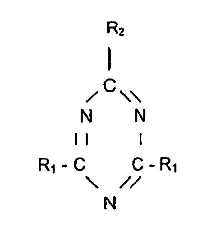 où
R₁ = R₄-O-CHR₃-NH- ; [R₄-O-CHR₃]₂N-
R₂ = -NH₂, -NH-CHR₃-OR₄, -N[CHR₃-O-R₄]₂, -CH₃, -C₃H₇, - C₆H₅,
R₃ = H ou C₁-C₇-alkyle ;
R₄ = C₁-C₁₈-alkyle ; H,
les segments de triazine dans les éthers d'oligotriazine 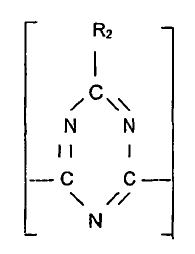 où
R₂= -NH₂, -NH-CHR₃-OR₄, -N[CHR₃-O-R₄]₂, -CH₃, -C₃H₇, -C₆H₅,
R₃ = H ou C₁-C₇-alkyle ;
R₄ = C₁-C₁₈-alkyle ; H,
étant connectés par des chaînons pontants pour former des éthers d'oligotriazine ayant de 4 à 18 noyaux à structure linéaire et/ou ramifiée,
les chaînons pontants dans le cas de connexion linéaire des anneaux de triazine formant le type I à III 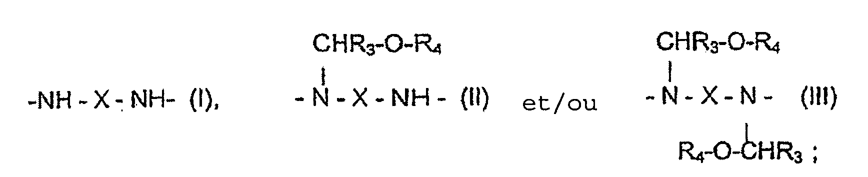 où X = CHR₃ et, le cas échéant, CHR₃-O-CHR₃,
et les chaînons pontants dans le cas de la structure ramifiée (z > v + 2; z = nombre des anneaux de triazine connectés; v = nombre des points de ramification) ainsi que les chaînons pontants du type I à III dans les segments de chaîne linéaires mais aussi les chaînons pontants du type IV à VII dans les segments de chaîne ramifiés à manière continue (z = v + 2) étant 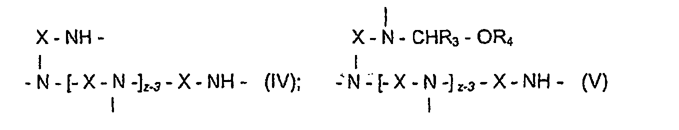 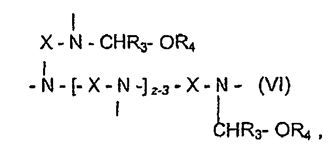 où X = CHR₃ et, le cas échéant, CHR₃-O-CHR₃, 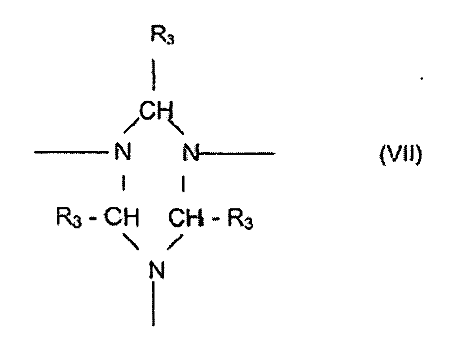 R³ = H ou C₁-C₇-alkyle ;
R⁴ = C₁-C₁₈-alkyle ; H,
le substituant R₄ dans les éthers d'aminotriazine ou les éthers d'oligotriazine étant exclusivement un radical C₁-C₁₈-alkyle ou, pour la majeure partie, un radical C₁-C₁₈-alkyle,
le rapport molaire groupements éther/segments de triazine, dans les éthers d'oligotriazine, allant de 1:2 à 4,5:1,
les éthers d'oligotriazine, pour lesquels, dans les chaînons pontants X = CHR₃-O-CHR₃, pouvant être contenus jusqu'à raison de 35 % en masse en les matières moulables polymères contenant dans des segments de triazine,
et les produits, en particulier les matières moulables en polymères contenant des segments de triazine pouvant contenir, le cas échéant, jusqu'à 75 % en masse de charges et/ou de fibres de renforcement, jusqu'à 50 % en masse de polymères réactifs supplémentaires du type copolymères de l'éthylène, copolymères de l'anhydride maléique, copolymères de l'anhydride maléique modifiés, poly(méth)acrylates, polyamides, polyesters et/ou polyuréthanes, ainsi que jusqu'à 2 % en masse d'agents de stabilisation, d'agents absorbeurs de rayons UV et/ou d'adjuvants,
dans un procédé à plusieurs étapes, lors duquel,
dans la première étape de procédé, l'on procède à l'éthérification de précondensats d'aldéhydes en C₁-C₈ et de dérivés de la triazine de structure 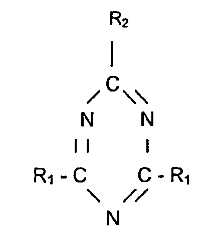 où
R₁ = -NH₂
R₂ = -NH₂, -CH₃, -C₃H₇, -C₆H₅, -OH, phtalimido-, succinimido-,
avec un rapport molaire dérivé de la triazine/aldéhyde de 1:1 à 1:4 par réaction avec des alcools en C₁-C₄ en présence de catalyseurs ioniques à une température allant de 5 à 100°C et l'on convertit les dérivés de la triazine obtenus substitués en C₁-C₄-alkyl-oxa-C₁-C₈-alkylène-amino, le cas échéant, par éthérification à l'aide d'alcools en C₄-C₁₈ avec une séparation par distillation des alcools en C₁-C₄ à une température allant de 80 à 120°C en dérivés de la triazine substitués en C₄-C₁₈-alkyl-oxa-C₁-C₈-alkylène-amino, et grâce au rapport groupements hydroxy-C₁-C₈-alkylène-amino/alcool utilisé, on parvient à un éthérification complète ou importante des groupements hydroxy des groupements hydroxy-C₁-C₈-alkylène-amino-triazine,
- lors duquel, dans la deuxième étape de procédé, l'on sépare, en vue du traitement du précondensat éthéré, l'alcool et l'eau n'ayant pas réagi du mélange réactionnel neutralisé initial et l'on dissout, le cas échéant, la masse en fusion des éthers d'aminotriazine à une température allant de 70 à 120°C dans de 70 à 150 % en masse, par rapport aux éthers d'aminotriazine, d'alcools en C₃ à C₆ et l'on sépare, après refroidissement à une température de 15 à 40°C, les portions insolubles et l'on évapore les alcools en C₃ à C₆ ajoutés à une température allant de 70 à 140°C jusqu'à une teneur résiduelle de 5 à 20 % en masse, une valeur de pH de 7 à 10 étant maintenue dans la deuxième étape de procédé,
- lors duquel, dans la troisième étape de procédé, en vue de la condensation des éthers d'aminotriazine pour former des éthers d'oligotriazine, l'on procède, dans une pétrisseuse en mode continu, au dosage de la masse en fusion obtenue, qui contient les triazines substituées en C₁-C₁₈-alkyl-oxa-C₁-C₈-alkylène-amino ainsi que de faibles portions d'éthers d'oligotriazine et d'alcool n'ayant pas réagi ou n'ayant pas été éliminé par séparation, le cas échéant après un équilibrage de la température de 20 à 120 minutes à une température allant de 70 à 140°C, l'on fait réagir pendant une durée de séjour de 2 à 12 minutes à une température de 140 à 220°C avec dégazage, et l'on procède, dans la masse en fusion, le cas échéant après une filtration de la masse en fusion, à l'évacuation et à la mise sous forme de granulés des éthers d'oligotriazine, le cas échéant avec dosage de jusqu'à 75 % en masse de charges et/ou de fibres de renforcement, de polymères réactifs supplémentaires du type copolymères de l'éthylène, copolymères de l'anhydride maléique, copolymères de l'anhydride maléique modifiés, poly(méth)acrylates, polyamides, polyesters et/ou polyuréthanes ainsi que de jusqu'à 2 % en masse, à chaque fois par rapport aux éthers d'oligotriazine, d'agents de stabilisation, d'agents absorbeurs de rayons UV, et/ou d'adjuvants,
les précondensats utilisés dans la première étape de procédé étant produits à partir de dérivés de la triazine et d'aldéhydes en C₁-C₈, le cas échéant dans une étape de réaction précédant la première étape de procédé, par hydroxyalkylation de dérivés de la triazine avec des aldéhydes en C₁-C₈ dans des alcools en C₁-C₄ ou dans des mélanges de 70 à 99 % en masse d'alcools en C₁-C₄ et de 30 à 1 % en masse d'eau, le cas échéant en présence de catalyseurs ioniques, à une température de 45 à 90°C et pour des durées de séjour de 15 à 140 minutes, les solutions des précondensats de dérivés de la triazine et d'aldéhydes en C₁-C₈, le cas échéant après neutralisation, étant directement utilisés lors de l'éthérification dans la première étape de procédé.

22. Procédé selon la revendication 21, **caractérisé en ce que** l'éthérification des précondensats d'aldéhydes en C₁-C₈ et des dérivés de la triazine se fait dans la première étape de procédé en présence de catalyseurs acides pour un pH allant de 3 à 4.

23. Procédé selon la revendication 21 ou 22, **caractérisé en ce que** l'on utilise, en tant que catalyseurs ioniques et/ou en vue de la neutralisation du mélange réactionnel initial, des bases, des acides, inorganiques ou organiques, des résines échangeuses d'ions et/ou des zéolites acides.

24. Procédé selon au moins l'une quelconque des revendications 21 à 23, **caractérisé en ce que**, lors de l'hydroxyalkylation dans l'étape de réaction précédant la première étape de procédé, l'on utilise une solution de formaldéhyde méthanolique ayant une teneur en matières solides de 40 à 50 % en masse, qui est fabriquée par dissolution du paraformaldéhyde dans des mélanges méthanol-eau.

25. Procédé selon au moins l'une quelconque des revendications 21 à 24, **caractérisé en ce que** l'hydroxyalkylation des dérivés de la triazine avec des aldéhydes en C₁-C₈ se fait dans l'étape de réaction précédant la première étape de procédé en présence de catalyseurs alcalins pour un pH allant de 8 à 9.

26. Procédé selon au moins l'une quelconque des revendications 21 à 25, **caractérisé en ce que**, dans la première étape de procédé, l'éthérification des précondensats avec des alcools en C₁-C₄ est effectuée en présence de 10 à 300% en masse, par rapport à la substance sèche des précondensats utilisés, de tamis moléculaires.

27. Procédé selon au moins l'une quelconque des revendications 21 à 26, **caractérisé en ce que**, dans la première étape de procédé, l'éthérification des précondensats avec des alcools en C₁-C₄ est effectuée en deux étapes de réaction, lorsque la fabrication des précondensats à partir de dérivés de la triazine et d'aldéhydes en C₁-C₈ se fait dans l'étape de réaction précédant la première étape de procédé.

28. Procédé selon au moins l'une quelconque des revendications 21 à 26, **caractérisé en ce que** l'étape de réaction précédant la première étape de procédé et la première étape de procédé sont effectuées simultanément dans une étape de procédé, des mélanges de résines échangeuses d'ions alcalines et acides ayant un rapport des capacités d'échange ionique de 1:1,15 à 1:1,7 étant utilisés en tant que catalyseurs.

29. Procédé de fabrication de produits, **caractérisé en ce que** des matières moulables en mélanges d'éthers d'oligotriazine fusibles à la chaleur ayant de 4 à 18 noyaux, à base d'éthers de triazine de structure 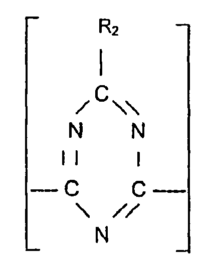 où
R₂ = -NH₂, -NH-CHR₃-OR₄, -N[CHR₃-O-R₄]₂, -CH₃, -C₃H₇, -C₆H₅,
R₃= H ou C₁-C₇-alkyle ;
R₄ = C₁-C₁₈-alkyle ; H,
sont reliées par des chaînons pontants pour former des éthers d'oligotriazine ayant de 4 à 18 noyaux avec une structure linéaire et/ou ramifiée,
les chaînons pontants forment, en cas de connexion linéaire des anneaux de triazine, le type I à III 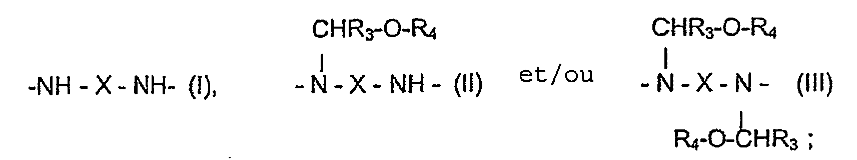 où X = CHR₃ et, le cas échéant, CHR₃-O-CHR₃,
et les chaînons pontants dans le cas de la structure ramifiée (z > v + 2; z = nombre des anneaux de triazine connectés; v = nombre des points de ramification) ainsi que les chaînons pontants du type I à III dans les segments de chaîne linéaires mais aussi les chaînons pontants du type IV à VII dans les segments de chaîne ramifiés à manière contenue (z = v + 2) sont 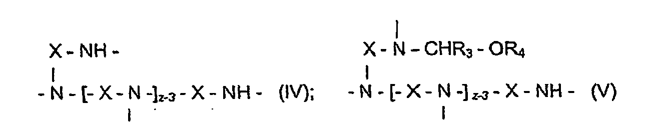 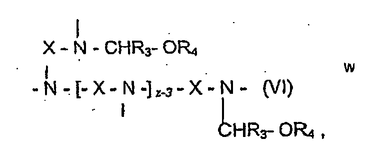 où X = CHR₃ et, le cas échéant, CHR₃-O-CHR₃, 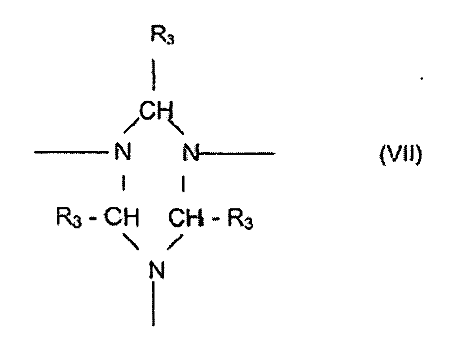 R³ = H ou C₁-C₇-alkyle ;
R⁴= C₁-C₁₈-alkyle; H,
le substituant R₄ dans les éthers d'aminotriazine ou les éthers d'oligotriazine étant exclusivement un radical C₁-C₁₈-alkyle ou, pour la majeure partie, un radical C₁-C₁₈-alkyle.
le rapport molaire groupements éther/segments de triazine, dans les éthers d'oligotriazine, allant de 1:2 à 4,5:1,
les éthers d'oligotriazine, pour lesquels dans le chaînon pontant X = CHR₃-O-CHR₃, pouvant être contenus jusqu'à raison de 35 % en masse dans les matières moulables en polymères contenant des segments de triazine,
et les produits en polymères contenant des segments de triazine pouvant contenir jusqu'à 75% en masse de charges ou de matériaux adsorbants et/ou de fibres de renforcement, jusqu'à 50 % en masse de polymères réactifs supplémentaires du type copolymères d'éthylène, copolymères de l'anhydride maléique, copolymères de l'anhydride maléique modifiés, poly(méth)acrylates, polyamides, polyesters et/ou polyuréthanes, ainsi que jusqu'à 2 % en masse d'agents de stabilisation, d'agents absorbeurs de rayons UV et/ou d'adjuvants,
sont mises en fusion dans des pétrisseuses en mode continu à des températures de masse de 105 à 220°C et des durées de séjour de 2 à 12 minutes, le cas échéant avec addition de jusqu'à 300 % en masse de charges et/ou de fibres de renforcement, de jusqu'à 100 % en masse de polymères réactifs supplémentaires du type copolymères d'éthylène, copolymères de l'anhydride maléique, copolymères de l'anhydride maléique modifiés, poly(méth)acrylates, polyamides, polyesters, et/ou polyuréthanes, ainsi que de jusqu'à 2 % en masse, à chaque fois par rapport aux éthers d'oligotriazine utilisés, d'agents de stabilisation, d'agents absorbeurs de rayons UV, et/ou d'adjuvants et, avec durcissement des éthers d'oligotriazine conformément aux procédés de mise en oeuvre usuels pour les polymères thermoplastiques,
A) sont évacuées en tant que masse en fusion sur une lisseuse et sont étirées et sont coupées en tant que plaques sur des bandes de transport ou sont collées sur des bandes planes en feuilles métalliques, en feuilles synthétiques, sur des bandes en papier ou sur des bandes textiles et sont extraites et conditionnées en tant que composites à plusieurs composants ou
B) sont évacuées à l'aide d'une buse à profil et étirées, coupées et confectionnées en tant que profilés ou en tant que matériaux de plaques ou
C) sont évacuées à l'aide d'une buse annulaire, sont étirées, coupées et confectionnées sous l'effet d'une introduction sous pression d'air en tant que tube ou
D) sont évacuées après introduction par dosage d'agents propulseurs par l'intermédiaire d'une filière plate et sont étirées sous la forme d'un matériau de plaque moussé ou
E) sont évacuées par l'intermédiaire d'une filière plate d'une installation de revêtement de tubes et sont collées à l'état de liquide en fusion sur le tube en rotation ou
F) sont mises en oeuvre dans des machines de moulage par injection, de préférence à l'aide de vis à trois zones d'une longueur de vis de 18 à 24 D, à des vitesses d'injection élevées et pour des températures d'outillage de 5 à 70°C, pour former des pièces moulées par injection ou
G) sont extrudées dans des installations de filature à l'état fondu à l'aide d'une pompe de masse à l'état fondu à travers l'outil capillaire dans le puits de soufflerie et sont extraits en tant que fils ou séparés en tant que fibres conformément au procédé melt-blow ou sont évacuées en tant que masse en fusion conformément au procédé de filature par rotation dans une chambre à champ de cisaillement à l'aide d'agents de dispersion organiques avec formation de fibrides de fibre et subissent un traitement ultérieur dans des équipements subséquents ou
H) sont dosées conformément au procédé d'infusion de résine dans un moule ouvert avec le produit fibreux semi-fini et sont mises en forme conformément à la technologie par sac à vide pour former des stratifiés ou
I) sont injectées conformément au procédé d'injection de résine dans un moule verrouillable, dans lequel se trouvent des ébauches en matériau textile, et sont mises en forme pour former des pièces et subissent un durcissement ou
K) sont utilisées en vue de l'imprégnation à l'état fondu d'ébauches de pièces fabriquées conformément au procédé d'enroulement, de tressage ou de pultrusion, et les produits sont soumis, le cas échéant, en vue du durcissement complet, à un traitement thermique subséquent à des températures de 180 à 220°C et pour des durées de séjour de 30 à 120 minutes.

30. Procédé de fabrication de produits selon la revendication 29, **caractérisé en ce que** la fabrication de fibrides de fibres en éthers d'oligotriazine se fait
- par l'introduction de la masse en fusion par l'intermédiaire de buses d'introduction à des températures de fusion de 105 à 130°C dans une chambre à champ de cisaillement, qui contient un agent de dispersion organique à point d'ébullition élevé chauffé à une température de 95 à 135°C, de préférence de l'huile de paraffine ou de l'huile de moteur, des gaz acides, de préférence du chlorure d'hydrogène ou du dioxyde de soufre, étant introduits dans la chambre à champ de cisaillement et le boudin de masse en fusion émergeant de la buse d'introduction étant étiré et découpé par l'huile mise sous forme de tourbillons par le rotor avec formation de fibres,
- par la conversion de la dispersion des fibrides de fibres formées dans des agents de dispersion organiques dans un séparateur à tamis avec extraction conjointe de l'agent de dispersion à point d'ébullition élevé par des hydrocarbures à point d'ébullition bas, de préférence de l'hexane ou de l'heptane,
- par la décharge du non tissé de fibres courtes de fribrides de fibres et, le cas échéant, par la post-réticulation thermique du non tissé de fibres courtes à des températures de 180 à 210°C et des durées de séjour de 40 à 120 minutes.

31. Utilisation de produits, en particulier de matières moulables selon au moins l'une quelconque des revendications 1 à 20 pour des applications à exigences élevées en terme de résistance aux flammes et en terme de stabilité thermique dans le domaine de la construction de bâtiments, de la construction de machines et de l'industrie automobile, en particulier sous la forme de plaques en mousse en tant que pièces d'isolation, sous la forme de plaques en tant qu'éléments d'habillage, sous la forme de tubes et profilés creux dans la technique de la ventilation, sous la forme de pièces moulées par injection en tant que pièces fonctionnelles, sous la forme de fibres, en particulier pour la fabrication de papiers d'isolation électrique, de vêtements de protection contre le feu, de vêtements pour températures de travail élevées, de couvertures de protection contre le feu, de non tissés pour filtres, de feutres pour machines à papier ainsi que de recouvrements d'isolation de véhicules ou de machines, sous la forme de pièces en matières synthétiques renforcées par des fibres conformément au procédé d'infusion de résine, ainsi que sous la forme de pièces sandwich conformément au procédé d'injection de résine ainsi que sous la forme de pièces, de récipients ou de profilés complexes conformément aux procédés d'enroulement, de tressage ou de pultrusion.

32. Utilisation de matières moulables selon au moins l'une quelconque des revendications 1 à 20 en vue du traitement de masse en fusion, en particulier en tant qu'adhésifs thermofusibles et en vue de la fabrication de plaques, de tubes, de profilés, de pièces moulées par injection, de fibres, de revêtements et de susbtances moussées, ainsi qu'en vue du traitement à partir de solution ou de dispersion en tant qu'adhésif, résine d'imprégnation, résine de vernis, résine de laminage ou en vue de la fabrication de mousses, de microcapsules ou de fibres.
